# EUROPEAN PATENT SPECIFICATION

(11) **EP 3 344 368 B1**
(45) Date of publication and mention of the grant of the patent: **15.09.2021**
(21) Application number: 16754369.3
(22) Date of filing: 10.08.2016
(51) Int. Cl.: B01D 53/04, B01D 3/14, B01D 53/047, C10L 3/10, F25J 3/02, B01D 53/26, B01D 53/28

(54) **PROCESS AND SYSTEM FOR SWING ADSORPTION USING AN OVERHEAD STREAM OF A DEMETHANIZER AS PURGE GAS**
VERFAHREN UND SYSTEM ZUR DRUCKWECHSELADSORPTION MIT EINEM OVERHEAD-STROM EINES DEMETHANIZERS ALS SPÜLGAS
PROCÉDÉ ET SYSTÈME POUR ADSORPTION MODULÉE AU MOYEN D'UN FLUX DE TÊTE D'UN DÉMÉTHANISEUR COMME GAZ DE PURGE

(30) Priority: 02.09.2015 US 201562213267 P
(43) Date of publication of application: 11.07.2018
(73) Proprietor: ExxonMobil Upstream Research Company, Spring, TX 77389 (US)
(72) Inventor: MCMAHON, Patrick D. J., The Woodlands, TX 77382 (US); JOHNSON, Robert A., Doylestown, PA 18902 (US); RAMKUMAR, Shwetha, Cypress, TX 77433 (US); OELFKE, Russell H., Houston, TX 77084 (US); THOMAS, Eugene R., Spring, TX 77389 (US); NAGAVARAPU, Ananda K., Houston, TX 77007 (US); BARNES, William, Spring, TX 77379 (US)
(74) Representative: ExxonMobil Chemical Europe Inc.
(86) International application number: PCT/US2016/046363
(87) International publication number: WO 2017/039989

(56) References cited:
- US-A- 5 486 227
- US-A1- 2015 013 377

## Description

### FIELD

The present techniques relate to a system associated with an enhanced swing adsorption process. In particular, the system relates to a swing adsorption process for the dehydration of a feed stream utilizing adsorbent beds which may be integrated with recovery equipment.

### BACKGROUND

Gas separation is useful in many industries and can typically be accomplished by flowing a mixture of gases over an adsorbent material that preferentially adsorbs one or more gas components, while not adsorbing one or more other gas components. The non-adsorbed components are recovered as a separate product.

One particular type of gas separation technology is swing adsorption, such as temperature swing adsorption (TSA), pressure swing adsorption (PSA), partial pressure purge swing adsorption (PPSA), rapid cycle pressure swing adsorption (RCPSA), rapid cycle partial pressure swing adsorption (RCPPSA), and not limited to but also combinations of the fore mentioned processes, such as pressure and temperature swing adsorption. As an example, PSA processes rely on the phenomenon of gases being more readily adsorbed within the pore structure or free volume of an adsorbent material when the gas is under pressure. That is, the higher the gas pressure, the greater the amount of readily-adsorbed gas adsorbed. When the pressure is reduced, the adsorbed component is released, or desorbed from the adsorbent material.

The swing adsorption processes (e.g., PSA and TSA) may be used to separate gases of a gas mixture because different gases tend to fill the micropore of the adsorbent material to different extents. For example, if a gas mixture, such as natural gas, is passed under pressure through a vessel containing an adsorbent material that is more selective towards carbon dioxide than it is for methane, at least a portion of the carbon dioxide is selectively adsorbed by the adsorbent material, and the gas exiting the vessel is enriched in methane. When the adsorbent material reaches the end of its capacity to adsorb carbon dioxide, it is regenerated in a PSA process, for example, by reducing the pressure, thereby releasing the adsorbed carbon dioxide. The adsorbent material is then typically purged and repressurized. Then, the adsorbent material is ready for another adsorption cycle.

The swing adsorption processes typically involve one or more adsorbent bed units, which include adsorbent beds disposed within a housing configured to maintain fluids at various pressures for different steps in an adsorption cycle within the unit. These adsorbent bed units utilize different packing material in the bed structures. For example, the adsorbent bed units utilize checker brick, pebble beds or other available packing. As an enhancement, some adsorbent bed units may utilize engineered packing within the bed structure. The engineered packing may include a material provided in a specific configuration, such as a honeycomb, ceramic forms or the like.

Further, various adsorbent bed units may be coupled together with conduits and valves to manage the flow of fluids. Orchestrating these adsorbent bed units involves coordinating the cycles for each adsorbent bed unit with other adsorbent bed units in the system. A complete PSA cycle can vary from seconds to minutes as it transfers a plurality of gaseous streams through one or more of the adsorbent bed units.

While conventional glycol absorption processes for dehydration of feeds, such as natural gas, are established and low cost processes, glycol absorption does not provide the level of dehydration required for certain recovery processes, such as cryogenic processing of natural gas, for example, to recover natural gas liquids (NGLs). For example, the water content of glycol dehydrated natural gas is relatively low (e.g., between 100 parts per million molar (ppm) and 200 ppm) at typical field dehydration specifications, but has to be reduced to less than 1 ppm, or even less than 0.1 ppm, for cryogenic processing.

Conventional dehydration of natural gas streams for subsequent cryogenic processing is accomplished using a TSA molecular sieve adsorption process. In the TSA molecular sieve adsorption process, the natural gas flows through molecular sieve adsorbent beds that extract the water from the gas in the stream. Several adsorbent beds are arranged in parallel to provide one or more molecular sieve adsorbent beds performing the adsorption step (e.g., adsorbing water from the stream), while one or more of the other molecular sieve adsorbent beds are performing regeneration steps (e.g., offline for regeneration to remove adsorbed contaminants from the adsorbent bed). When the molecular sieve adsorbent bed is almost saturated, the molecular sieve adsorbent bed is placed into a regeneration step (e.g., taken offline) and a portion of the dry gas product stream is heated to about 500 °F (260 °C) in a fired heater and directed through the molecular sieve adsorbent bed to raise the temperature and desorb the water from the molecular sieve adsorbent bed. The wet regeneration gas (e.g., gas with the desorbed water from the bed) is then cooled outside the bed to condense out the water and the gas is recycled into the feed stream upstream of the dehydration system. Unfortunately, for typical NGL recovery plants, such as a cryogenic NGL recovery plants, the molecular sieve adsorbent beds require large high pressure vessels and involve large volumes of gas and adsorbent material. As the TSA molecular sieve adsorption process operates at feed stream pressure, the units involve high pressures, contain a large inventory of adsorbent material, are heavy, have a large footprint, and are costly to operate. Also, the duration of the thermal swing cycle is two or more hours as the adsorption front progresses through the majority of the molecular sieve adsorbent bed's length. The TSA molecular sieve adsorption process also requires a regeneration gas fired heater that uses significant amounts of fuel and requires a large footprint due to the safety spacing requirements for fired elements.

Conventionally, following its regenerating of the wet adsorbent beds, the wet regeneration gas is recycled to the feed stream upstream of the dehydration system or used as process plant fuel. To avoid excessive recycle, the volume of the dry gas that can be used for regeneration is limited to a small percentage of the feed stream volume, typically less than ten percent. With a relatively low volume of regeneration gas and the need to nearly completely dehydrate the adsorbent bed during regeneration, a high regeneration temperature of about 500 °F (260 °C) or more is needed to completely regenerate the molecular sieve adsorbent beds during each cycle. Even when the regeneration gas is limited to 500 °F (260 °C), the temperature of the regeneration gas can eventually cause hydrothermal degradation of the adsorbent particles and coke formation within the bed leading to deactivation, which is further increased with higher temperatures of the purge stream. Additionally, the use of a fired heater in a natural gas plant requires increased equipment spacing for risk mitigation, which is particularly costly in an offshore facility.

As another approach, a PSA molecular sieve adsorption process may be used for the process. This approach uses a low flow stream of purge gas at a low pressure to regenerate the molecular sieve adsorbent beds. Unfortunately, this process includes recycle compression for typical natural gas dehydration applications. As obtaining high regeneration gas temperatures is less costly than recycle compression, the PSA molecular sieve adsorption process is more costly than the TSA molecular sieve adsorption process noted above.
US 5,486,227 A relates to a process integrating temperature swing adsorption (TSA), pressure swing adsorption (PSA) and cryogenic distillation to optimize overall performance in purifying and liquefying a feed gas mixture containing a less strongly adsorbed component of lower volatility. US 2015/0013377 A1 relates to methods and systems for separating a ethane and CO₂ from a mixed stream, wherein the liquid stream is flashed to form an ethane vapor stream and solid CO₂; the solid CO₂ is accumulated in an accumulation vessel and the gas is removed from the top of the accumulation vessel.

Accordingly, there remains a need in the industry for apparatus, methods, and systems that provide enhancements to the processing of feed streams with adsorbent beds, which may be integrated with recovery equipment. The present techniques provide enhancements by utilizing PPSA processes to regenerate adsorbent beds at lower pressure and temperatures than those utilized in conventional molecular sieve TSA and PSA approaches. The present techniques overcomes the drawbacks of conventional molecular sieve TSA and PSA approaches by using larger purge gas volumes (e.g., ten to twenty times greater than in conventional molecular sieve TSA and PSA approaches). Further, a need remains for an approach that does not involve the use of purge gases heated to higher temperatures (e.g., at above 500 °F (260 °C)) or the use of fired heaters.

### SUMMARY OF THE INVENTION

In one or more embodiments, the present invention is concerned with a process according to claim 1. The present disclosure is concerned with techniques that include a cyclical swing adsorption process for removing contaminants from a gaseous feed stream. The process comprising: a) performing one or more adsorption steps, wherein each of the adsorption steps comprises passing a gaseous feed stream at a feed pressure and feed temperature through an adsorbent bed unit to remove one or more contaminants from the gaseous feed stream and to form a product stream that is passed to a cryogenic recovery system including a demethanizer; b) performing one or more depressurization steps, wherein the pressure of the adsorbent bed unit is reduced by a predetermined amount with each successive depressurization step; c) performing one or more purge steps, wherein each of the purge steps comprises passing a purge stream through the adsorbent bed unit in a counter flow direction relative to the flow of the gaseous feed stream to form a purge product stream, wherein the purge stream comprises at least a portion of a demethanizer overhead stream from the demethanizer; d) performing one or more re-pressurization steps, wherein the pressure within the adsorbent bed unit is increased with each re-pressurization step by a predetermined amount with each successive re-pressurization step; and e) repeating the steps a) to d) for at least one additional cycle. The purge stream may comprise at least 20 volume % of the demethanizer overhead stream or may comprise at least 50 volume % of the demethanizer overhead stream.

In another embodiment, the present invention is concerned with a system according to claim 15. The present disclosure is concerned with a system for removing contaminants from a gaseous feed stream; the system may include one or more adsorbent bed units and a cryogenic recovery system in fluid communication with the one or more adsorbent bed units. The one or more adsorbent bed units may each be configured to separate contaminants from a gaseous feed stream and to output a product stream, wherein the gaseous feed stream is provided at a feed temperature. Also, the cryogenic recovery system in fluid communication with the one or more adsorbent bed units may be configured to receive the product stream and pass at least portion of the product stream to a demethanizer to separate the at least a portion of the product stream into a final product stream and a demethanizer overhead stream. Further, a purge stream may be passed through the one or more adsorbent bed units and may comprise at least a portion of the demethanizer overhead stream.

### BRIEF DESCRIPTION OF THE FIGURES

The foregoing and other advantages of the present disclosure may become apparent upon reviewing the following detailed description and drawings of non-limiting examples of embodiments.
Figure 1 is a three-dimensional diagram of the swing adsorption system with six adsorbent bed units and interconnecting piping in accordance with an embodiment of the present techniques.
Figure 2 is a diagram of a portion of an adsorbent bed unit having associated valve assemblies and manifolds in accordance with an embodiment of the present techniques.
Figure 3 is a diagram of a conventional molecular sieve adsorption system for dehydration of a feed stream to form a cryogenic NGL recovery stream.
Figure 4 is an exemplary diagram of the integration of a PPSA dehydration system with a cryogenic NGL recovery system in accordance with an embodiment of the present techniques.
Figure 5 is an exemplary chart associated with the configuration in Figure 4 in accordance with an embodiment of the present techniques.
Figures 6A, 6B, 6C and 6D are exemplary diagrams associated with the configuration in Figure 4 in accordance with an embodiment of the present techniques.
Figure 7 is an exemplary diagram of the integration of a PPSA dehydration system with a cryogenic CFZ recovery system in accordance with an embodiment of the present techniques.

### DETAILED DESCRIPTION OF THE INVENTION

Unless otherwise explained, all technical and scientific terms used herein have the same meaning as commonly understood by one of ordinary skill in the art to which this disclosure pertains. The singular terms "a," "an," and "the" include plural referents unless the context clearly indicates otherwise. Similarly, the word "or" is intended to include "and" unless the context clearly indicates otherwise. The term "includes" means "comprises." In case of conflict as to the meaning of a term or phrase, the present specification, including explanations of terms, control. Directional terms, such as "upper," "lower," "top," "bottom," "front," "back," "vertical," and "horizontal," are used herein to express and clarify the relationship between various elements. It should be understood that such terms do not denote absolute orientation (e.g., a "vertical" component can become horizontal by rotating the device). The materials, methods, and examples recited herein are illustrative only and not intended to be limiting.

As used herein, "stream" refers to fluid (e.g., solids, liquid and/or gas) being conducted through various equipment. The equipment may include conduits, vessels, manifolds, units or other suitable devices.

As used herein, volume percent is based on standard conditions. The standard conditions for a method may be normalized to the temperature of 0 °C (e.g., 32 °F) and absolute pressure of 100 kiloPascals (kPa) (1 bar).

As used herein, "conduit" refers to a tubular member forming a channel through which fluids or the other materials are conveyed. The conduit may include one or more of a pipe, a manifold, a tube or the like.

The present techniques relate to a swing adsorption process (e.g., a rapid cycle process) for the deep dehydration of a feed stream (e.g., natural gas) utilizing rapidly cycled adsorbent beds. The present techniques integrate rapid cycle partial pressure purge swing adsorption (PPSA) process for dehydration of a feed stream (e.g., a natural gas stream) with downstream recovery equipment (e.g., a cryogenic Natural Gas Liquid (NGL) recovery process). The residue gas from the downstream recovery equipment, such as a demethanizer overhead stream from a NGL recovery process, is used in the dehydration process as a purge gas to regenerate the adsorbent bed. The purge stream may be used to recover water from the adsorbent bed and may be configured to mix with residue sales gas (e.g., demethanizer overhead stream). Beneficially, in such a configuration, no regeneration gas has to be recycled to upstream of the dehydration process or used as fuel.

In contrast to conventional approaches, the present techniques utilize PPSA to dehydrate the adsorbent bed. As a result, the purge gas is not generated by other means, such as gas furnaces and the like. The purge stream may be utilized to provide cost and safety benefits, along with operational enhancements. For example, the purge stream may lessen hydrothermal degradation of the adsorbent and lessen coke formation. Further, the present techniques may be less expensive compared to conventional TSA molecular sieve systems and have a smaller footprint by using adsorbent beds rather than conventional TSA molecular sieve dehydration.

As one enhancement, the present techniques provide the purge output stream from the adsorbent bed from the purge step to pipeline sales gas after passing through the adsorbent bed unit. The purge output stream is provided to pipeline sales gas because the pipeline sales gas product specifications are typically less stringent than cryogenic processing feed gas specifications. Thus, water that has been removed for subsequent downstream processing (e.g., cryogenic processing to remove a portion of the hydrocarbons heavier than methane) may be returned to the natural gas sales gas stream, which is referred to as sales gas, after the recovery (e.g., NGL recovery) without adverse effects. The configuration uses substantially all or the entire residue gas stream from the NGL plant as purge gas for the purge gas stream, which may be the demethanizer overhead stream. As a result, the heating or pressure reduction and recompression of the purge stream (e.g., regeneration gas) may not be required. Further, by lessening the temperature of the adsorbent bed heating during the regeneration step or desorption step, the reliance on the fired heater is eliminated for steady state or normal operations, which reduces capital investment and process footprint. Also, the configuration lessens coke formation within the adsorbent beds and hydrothermal degradation of the adsorbent materials that challenge conventional TSA molecular sieve adsorption processes.

Also, the present techniques may also include various pressures for the feed stream and the purge stream. For example, the feed pressure may be based on the preferred adsorption feed pressure, which may be in the range from 400 pounds per square inch absolute (psia) (27.58 bara) to 1,400 psia (96.53 bara), or in the range from 600 psia (41.4 bara) to 1,200 psia (82.74 bara). Also, the purge pressure may be based on the preferred adsorbent purge pressure, which may be in the range from 200 psia (13.79 bara) to 800 psia (55.16 bara), in the range from 400 psia (27.58 bara) to 600 psia (41.37 bara).

As another enhancement, the present techniques may provide dehydration through the use of a rapid cycle swing adsorption process, such as a rapid cycle PPSA process. While the swing capacity per weight of the adsorbent bed may be less than conventional TSA molecular sieve dehydration, without the requirement for complete drying of the adsorbent bed (e.g., making the quantity of adsorbent required larger), the use of rapid cycles lessens the adsorbent quantity as compared to conventional TSA molecular sieve dehydration in that the required adsorbent quantity is ten to more than one hundred times smaller than conventional TSA molecular sieve dehydration. Also, it may not be required that the purge stream used on the adsorbent bed completely dries the feed end of the adsorbent bed.

In the present techniques, the product end of the adsorbent bed is maintained nearly dry (e.g., the water loading for the region near the product end is less than 1 mole per kilogram (mol/kg), is less than 0.5 mol/kg, or is less than 0.1 mol/kg), but is it is not essential to fully dry the feed end of the adsorbent bed. The feed end or feed side is the end of the adsorbent bed that the feed stream initially enters, while the product end is the end of the adsorbent bed opposite from the feed end and where the feed stream exits the adsorbent bed. The loading level of water may be lower on the feed side of the adsorbent bed during the purge step, but the length of adsorbent bed that contains water may be reduced during the purge step. For example, an adsorbate loaded region may be a specific portion of the adsorbent bed from the feed end of the adsorbent bed to 10% of the bed length, from the feed end of the adsorbent bed to 40% of the bed length or from the feed end of the adsorbent bed to 75% of the bed length. Utilizing only a portion of the bed length ensures that the product end of the bed remains rigorously dry and enables extremely low product water concentrations. Further, maintaining a significant portion of the product end of the bed dry provides flexibility for non-uniformity of gas passage channels in embodiments where a structured adsorbent, such as a monolith, is used for the adsorbent bed or adsorber structure. The product region may be a specific portion of the adsorbent bed from the product end of the adsorbent bed to 10% of the bed length, from the product end of the adsorbent bed to 25% of the bed length or from the product end of the adsorbent bed to 40% of the bed length. The difference between the total adsorbent bed water loading during the purge step and during the adsorption step is the basis of the swing capacity of the process.

In one or more embodiments, the flow rate of the purge stream may be associated with the flow rate of the demethanizer overhead stream. The purge stream comprises at least 20 volume % of the demethanizer overhead stream, at least 50 volume % of the demethanizer overhead stream, at least 80 volume % of the demethanizer overhead stream or at least 95 volume % of the demethanizer overhead stream. In certain embodiments, the purge stream flow rate may be substantially the same as the flow rate of the demethanizer overhead flow rate (e.g., about 100 volume %).

Further, in other embodiments, the purge stream is provided at a temperature substantially similar to the temperature of the feed stream. The purge stream temperature may be within a range from 10 °F below the feed temperature (5.6 °Celsius (C) below the feed temperature) and 350 °F above the feed temperature (194 °C above the feed temperature), within a range from 10 °F below the feed temperature (5.6 °C below the feed temperature) and 200 °F above the feed temperature (111.1 °C above the feed temperature) or within a range from 10 °F below the feed temperature (5.6 °C below the feed temperature) and 50 °F above the feed temperature (27.8 °C above the feed temperature). As another example, the purge stream temperature may be within a range from 25 °F below the feed temperature (13.9 °C below the feed temperature) and 350 °F above the feed temperature (194 °C above the feed temperature), within a range from 25 °F below the feed temperature (13.9 °C below the feed temperature) and 200 °F above the feed temperature (111.1 °C above the feed temperature) or within a range from 25 °F below the feed temperature (13.9 °C below the feed temperature) and 50 °F above the feed temperature (27.8 °C above the feed temperature). As a specific example, the feed stream may be provided at a temperature of 86 °F (30 °C) and at a feed pressure of 1000 psi (68.95 bar). The resulting purge stream may have a temperature in the range between 72 °F (22.2 °C) and 500 °F (260 °C) or below (to minimize any thermal degradation of the adsorbent bed) and purge pressure of 436 psi (30.06 bar), or may be at a lower pressure. As another example, the feed stream may be at a pressure of about 1000 psi (68.95 bara) and a temperature of about 75°F (23.9 °C), the purge stream may be at a temperature of about 70°F (21.1 °C) and a pressure of about 450 psi (31.03 bar). Another alternate example, the operating conditions may include higher temperature for the feed stream and purge stream and pressures at or below 1000 psi (68.95 bar).

In other configurations, the temperature of the purge stream may be sufficiently close to the feed temperature. For example, the purge temperature may be in a range from 10°F below the feed temperature (5.6 °C below the feed temperature) and 25°F above the feed temperature (13.9 °C above the feed temperature), within a range from 10°F below the feed temperature (5.6 °C below the feed temperature) and 10°F above the feed temperature (5.6 °C above the feed temperature), within a range from 7°F below the feed temperature (3.9 °C below the feed temperature) and 7°F above the feed temperature (3.9 °C above the feed temperature) or within a range from 5°F below the feed temperature (2.8 °C below the feed temperature) and 5°F above the feed temperature (2.8 °C above the feed temperature).

Also, the present techniques may be integrated into a various configurations. For example, the present techniques may be utilized, but not limited to, dehydration prior to and integrated with a cryogenic Natural Gas Liquid (NGL) recovery system, which may involve removing contaminants to cryogenic processing feed gas specifications. Other embodiments may include configurations that involve integration with a controlled freeze zone (CFZ) process. For example, the configuration may use the adsorbent bed units to remove heavy hydrocarbons from CFZ process, and then use the CO₂ and H₂S clean CFZ product to purge the heavy hydrocarbons off the adsorbent beds in the adsorbent bed units. Further still, other integrations may include liquefied natural gas (LNG) plant, or other such plants. Regardless, the present techniques may be used to treat feed streams containing excessive amounts of water and CO₂. The present techniques may also be used to remove contaminants to other specifications, such as cryogenic natural gas liquefaction specifications for a cryogenic natural gas liquefaction recovery plant.

Beneficially, the present techniques provide a modular design and may be configured to lessen the footprint, weight, and capital expense of processes to perform dehydration of feed streams (e.g., predominately natural gas streams) utilizing rapidly cycled adsorbent beds. Also, as this process does not involve the use any fired heater (e.g. fired furnaces for normal operations), the present techniques may eliminate the use of fired heaters or high temperature heat exchanger from the process. The removal of such equipment is inherently safer due to the elimination of the flames along with the associated equipment and may lower fuel consumption and greenhouse gas (GHG) emissions due to lack of combustion in a furnace. Further, the present techniques may increase flexibility regarding the selection of adsorbent material used in the process, may reduce dust formation due to monolithic adsorbent bed design, may lessen solid waste production due to lower adsorbent quantities and/or may lessen adsorption of heavy hydrocarbons (e.g., C₂+) by appropriate selection of adsorbent materials. The present techniques may also lower impact on downstream process equipment when switching adsorbent beds, but utilizing spare units to provide a mechanism for some of the adsorbent bed units to be removed from service for adsorbent bed reconditioning or other similar processes, while continuing to supply the downstream processes with a steady flow of dry or cleaned feed stream.

In one or more embodiments, the present techniques can be used for any type of swing adsorption process. Non-limiting swing adsorption processes for which the present techniques may include pressure swing adsorption (PSA), vacuum pressure swing adsorption (VPSA), temperature swing adsorption (TSA), partial pressure swing adsorption (PPSA), rapid cycle pressure swing adsorption (RCPSA), rapid cycle thermal swing adsorption (RCTSA), rapid cycle partial pressure swing adsorption (RCPPSA), as well as combinations of these processes, such as pressure and/or temperature swing adsorption. Exemplary kinetic swing adsorption processes are described in U.S. Patent Application Publication Nos. 2008/0282892, 2008/0282887, 2008/0282886, 2008/0282885, 2008/0282884 and 2014/0013955.

Adsorptive separation processes, apparatus, and systems, as described above, are useful for development and production of hydrocarbons, such as gas and oil processing. Particularly, the provided processes, apparatus, and systems are useful for the rapid, large scale, efficient separation of a variety of target gases from gas mixtures. In particular, the processes, apparatus, and systems may be used to prepare feed products (e.g., natural gas products) by removing contaminants and heavy hydrocarbons (e.g., hydrocarbons having at least two carbon atoms). The provided processes, apparatus, and systems are useful for preparing gaseous feed streams for use in utilities, including separation applications. The separation applications may include dew point control; sweetening and/or detoxification; corrosion protection and/or control; dehydration; heating value; conditioning; and/or purification. Examples of utilities that utilize one or more separation applications include generation of fuel gas; seal gas; non-potable water; blanket gas; instrument and control gas; refrigerant; inert gas; and/or hydrocarbon recovery.

In certain embodiments, the present techniques may be used to remove contaminants from feed streams, such as acid gas from hydrocarbon streams. Acid gas removal technology may be useful for gas reserves exhibit higher concentrations of acid gas (e.g., sour gas resources). Hydrocarbon feed streams vary widely in amount of acid gas, such as from several parts per million acid gas to 90 volume percent (vol. %) acid gas. Non-limiting examples of acid gas concentrations from exemplary gas reserves include concentrations of at least: (a) 1 vol.% H₂S, 5 vol.% CO₂, (b) 1 vol.% H₂S, 15 vol.% CO₂, (c) 1 vol.% H₂S, 60 vol.% CO₂, (d) 15 vol.% H₂S, 15 vol.% CO₂, and (e) 15 vol.% H₂S, 30 vol.% CO₂. Accordingly, the present techniques may include equipment to remove various contaminants, such as H₂S and CO₂ to desired levels. In particular, the H₂S may be lowered to levels less than 4 ppm, while the CO₂ may be lowered to levels less than 1.8 molar percent (%) or, preferably, less than 50 ppm.

In certain embodiments, the gaseous feed stream may predominately comprise hydrocarbons alone with one or more contaminants. For example, the gaseous feed stream may be a hydrocarbon containing stream having greater than one volume percent hydrocarbons based on the total volume of the feed stream. Further, the gaseous feed stream may include hydrocarbons and H₂O, wherein the H₂O is one of the one or more contaminants and the gaseous feed stream comprises H₂O in the range of 50 parts per million (ppm) molar to 1,500 ppm molar; or in the range of 500 ppm to 1,500 ppm molar. Moreover, the gaseous feed stream may include hydrocarbons and H₂O, wherein the H₂O is one of the one or more contaminants and the gaseous feed stream comprises H₂O in the range of two ppm molar to saturation levels in the gaseous feed stream. In addition, the gaseous feed stream comprises hydrocarbons and CO₂, wherein the CO₂ is one of the one or more contaminants and the gaseous feed stream comprises CO₂ in the range between 0 molar percent and 5 molar percent of the total volume of the gaseous feed stream or the range between 0 molar percent and 2 molar percent of the total volume of the gaseous feed stream.

In other embodiments, the present techniques may be used to lessen the water content of the stream to a specific level by the swing adsorption process. The specific level may be related to dew point of desired output product (e.g., the water content should be lower than the water content required to obtain a dew point below the lowest temperature of the stream in subsequent process and is related to the feed pressure. As a first approximation, and not accounting for fugacity corrections as a function of pressure, the water concentration in ppm that yields a certain dew point varies inversely with the pressure. For example, the output stream from the adsorbent bed may be configured to be the cryogenic processing feed stream, which satisfies the cryogenic processing specifications (e.g., approximately -150°F (-101.1 °C) dew point for NGL processes or approximately -60 °F (-51.1 °C) for Controlled Freeze Zone (CFZ) processes. The cryogenic processing feed stream specification may include a water content in the stream (e.g., output stream from the adsorbent bed or feed stream to the to be cryogenic processing) to be in the range between 0.0 ppm and 10 ppm, in the range between 0.0 ppm and 5.0 ppm, in the range between 0.0 ppm and 2.0 ppm, or in the range between 0.0 ppm and 1.0 ppm. The resulting output stream from the adsorbent beds during the purge step may include a water content in the stream to be in the range between 0.0 ppm and 7 pounds per standard cubic feet (lb/MSCF) (112 kg per standard cubic meter (kg/MSCM)).

In one or more embodiment, the present techniques may be used as an integration of a rapid cycle PPSA process for removal of contaminants from a feed stream (e.g., natural gas stream) with a downstream cryogenic NGL recovery process. For example, the configuration may include an integration of PPSA in the adsorption process to remove low levels of CO₂ from natural gas (about 2% by volume CO₂) with a cryogenic NGL plant configured for ethane recovery. The CO₂ removal may be limited to less than the natural gas sales gas specifications. In particular, as the gaseous feed stream may include hydrocarbons and one or more contaminants, such as CO₂, the CO₂ in the gaseous feed stream may be less than the quantity of one minus the molar fraction of heavy hydrocarbons in the gaseous feed stream times the sales gas CO₂ maximum concentration specification. By way of example, if the natural gas sales gas specification is CO₂ content of 2 molar % or less, and the process removes 10 molar % heavy hydrocarbons in the NGL plant, then the purge stream may be 10 molar % less than the original feed, which results in a maximum CO₂ content in the original feed being less than 1.8 molar % CO₂ so the resulting purge stream is less than 2.0 molar % CO₂ content. In the cryogenic NGL plant, the demethanizer column overhead stream may be used as the purge gas to regenerate the adsorbent beds, while returning the low levels of CO₂ to the sales gas. Further, in another example, the configuration may include an integration of PPSA for removal of heavy hydrocarbons from a natural gas with the Controlled Freeze Zone™ (CFZ) process for bulk CO₂ removal from natural gas. *See, e.g.,* U.S. Patent Application Nos. 2009/0266107 and 2010/0018248. In this configuration, the sweet gas (e.g., stream having H₂S and CO₂ removed or below desired levels) from the CFZ process may be used as the purge gas to regenerate the adsorbent beds, while desorbing the heavy hydrocarbons into the sales gas stream to increase its heating value or provide a mechanism for subsequent heavy hydrocarbon recovery. As yet another example, the configuration may include an integration of a cyclic gas treating process for removal of a first component from a gas stream, where the first component may interfere with a subsequent process (e.g., a second process for the removal of other components from the gas stream). In this configuration, a substantial portion or the entire the residue gas stream remaining after removal of the other components in the second process is then returned to the first process to recover the first components into the residue gas stream. Also, no other stream may be recycled from the first process to the feed stream or to fuel.

Further, other configurations may include bypassing at least a portion of the gaseous feed stream around the swing adsorption process. In such configurations, a larger amount of contaminants may be processed in the system. For example, if a higher CO₂ content stream has to be processed as the gaseous feed stream, then a bypass configuration may be utilized to divert at least a portion of the gaseous feed stream around the swing adsorption process (e.g., adsorbent bed units) and recombine the bypass stream with the product stream from the swing adsorption process downstream of the swing adsorption process and upstream of the demethanizer. In this configuration, excess CO₂ goes with the NGLs and the demethanizer overhead is still within the pipeline specification for CO₂.

In yet another embodiment, the present techniques may not recycle the regeneration gas to the feed stream or fuel gas. This configuration overcomes the drawbacks of conventional TSA molecular sieve adsorption process and PSA molecular sieve adsorption process by permitting the use of much larger purge gas volumes. For example, the purge gas volume may be ten to twenty times greater than in conventional TSA molecular sieve adsorption process and PSA molecular sieve adsorption process. Accordingly, the PPSA may be used to regenerate the adsorbent beds at moderate temperatures, as noted above, and pressures and lower cost.

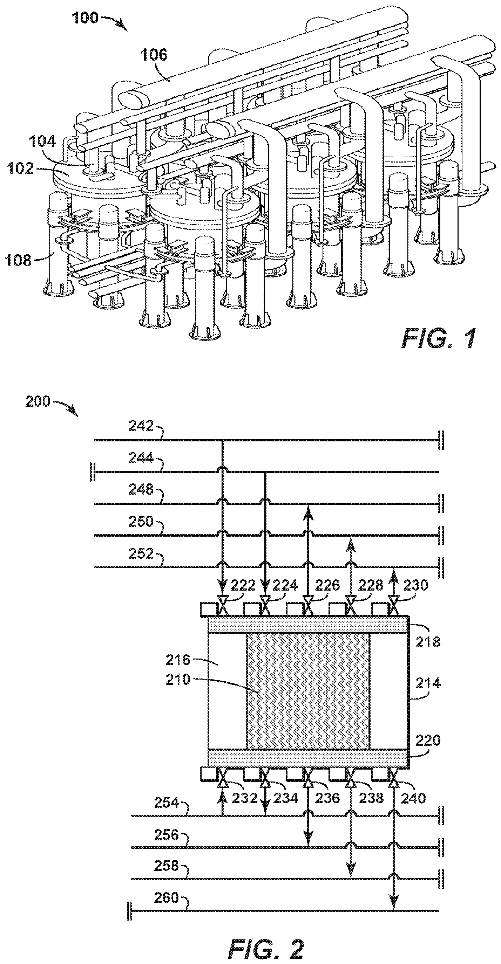

Further, in one or more embodiments, the present techniques may include a specific process flow to remove contaminants, such as water. For example, the process may include an adsorbent step and a regeneration step, which form the cycle. The adsorbent step may include passing a gaseous feed stream at a feed pressure and feed temperature through an adsorbent bed unit to separate one or more contaminants from the gaseous feed stream to form a product stream. The feed stream may be passed through the adsorbent bed in a forward direction (e.g., from the feed end of the adsorbent bed to the product end of the adsorbent bed). Then, the flow of the gaseous feed stream may be interrupted for a regeneration step. The regeneration step may include one or more depressurization steps, a purge step and one or more re-pressurization steps. The depressurization steps may include reducing the pressure of the adsorbent bed unit by a predetermined amount for each successive depressurization step, which may be a single step and/or may be a blowdown step. The depressurization step may be provided in a forward direction or may preferably be provided in a countercurrent direction (e.g., from the product end of the adsorbent bed to the feed end of the adsorbent bed). The purge step may include passing a purge stream into the adsorbent bed unit, which may be a once through purge step and the purge stream may be provided in countercurrent flow relative to the feed stream. The output stream from the purge step may be conducted away for fuel in other equipment, such as the NGL plant, CFZ plant and/or LNG plant. Then, the one or more re-pressurization steps may be performed, wherein the pressure within the adsorbent bed unit is increased with each re-pressurization step by a predetermined amount with each successive re-pressurization step. Then, the cycle may be repeated for additional streams. The cycle duration may be for a period greater than 1 second and less than 600 seconds, for a period greater than 2 second and less than 300 seconds, for a period greater than 2 second and less than 200 seconds, or for a period greater than 2 second and less than 90 seconds. The present techniques may be further understood with reference to the Figures 1 to 7 below.

Figure 1 is a three-dimensional diagram of the swing adsorption system **100** having six adsorbent bed units and interconnecting piping. While this configuration is a specific example, the present techniques broadly relate to adsorbent bed units that can be deployed in a symmetrical orientation, or non-symmetrical orientation and/or combination of a plurality of hardware skids. Further, this specific configuration is for exemplary purposes as other configurations may include different numbers of adsorbent bed units.

In this system, the adsorbent bed units, such as adsorbent bed unit **102,** may be configured for a cyclical swing adsorption process for removing contaminants from feed streams (e.g., fluids, gaseous or liquids). For example, the adsorbent bed unit **102** may include various conduits (e.g., conduit **104**) for managing the flow of fluids through, to or from the adsorbent bed within the adsorbent bed unit **102**. These conduits from the adsorbent bed units **102** may be coupled to a manifold (e.g., manifold 106) to distribute the flow of the stream to, from or between components. The adsorbent bed within an adsorbent bed unit may separate one or more contaminants from the feed stream to form a product stream. As may be appreciated, the adsorbent bed units may include other conduits to control other fluid steams as part of the process, such as purge streams, depressurizations streams, and the like. Further, the adsorbent bed unit may also include one or more equalization vessels, such as equalization vessel **108,** which are dedicated to the adsorbent bed unit and may be dedicated to one or more step in the swing adsorption process.

As an example, which is discussed further below in Figure 2, the adsorbent bed unit 102 may include a housing, which may include a head portion and other body portions, that forms a substantially gas impermeable partition, an adsorbent bed disposed within the housing and a plurality of valves (e.g., poppet valves) providing fluid flow passages through openings in the housing between the interior region of the housing and locations external to the interior region of the housing. Each of the poppet valves may include a disk element that is seatable within the head or a disk element that is seatable within a separate valve seat inserted within the head (not shown). The configuration of the poppet valves may be any variety of valve patterns or configuration of types of poppet valves. As an example, the adsorbent bed unit may include one or more poppet valves, each in flow communication with a different conduit associated with different streams. The poppet valves may provide fluid communication between the adsorbent bed and one of the respective conduits, manifolds or headers. The term "in direct flow communication" or "in direct fluid communication" means in direct flow communication without intervening valves or other closure means for obstructing flow. As may be appreciated, other variations may also be envisioned within the scope of the present techniques.

The adsorbent bed comprises a solid adsorbent material capable of adsorbing one or more components from the feed stream. Such solid adsorbent materials are selected to be durable against the physical and chemical conditions within the adsorbent bed unit 102 and can include metallic, ceramic, or other materials, depending on the adsorption process. Further examples of adsorbent materials are noted further below.

Figure 2 is a diagram **200** of a portion of an adsorbent bed unit having valve assemblies and manifolds in accordance with an embodiment of the present techniques. The portion of the adsorbent bed unit **200,** which may be a portion of the adsorbent bed unit **102** of Figure 1, includes a housing or body, which may include a cylindrical wall **214** and cylindrical insulation layer **216** along with an upper head **218** and a lower head **220.** An adsorbent bed **210** is disposed between an upper head **218** and a lower head **220** and the insulation layer **216,** resulting in an upper open zone, and lower open zone, which open zones are comprised substantially of open flow path volume. Such open flow path volume in adsorbent bed unit contains gas that has to be managed for the various steps. The housing may be configured to maintain a pressure between 0 bara (bar absolute) or 0.1 bara and 100 bara within the interior region.

The upper head **218** and lower head **220** contain openings in which valve structures can be inserted, such as valve assemblies **222** to **240,** respectively (e.g., poppet valves). The upper or lower open flow path volume between the respective head **218** or **220** and adsorbent bed **210** can also contain distribution lines (not shown) which directly introduce fluids into the adsorbent bed **210.** The upper head **218** contains various openings (not show) to provide flow passages through the inlet manifolds **242** and **244** and the outlet manifolds **248, 250** and **252,** while the lower head **220** contains various openings (not shown) to provide flow passages through the inlet manifold **254** and the outlet manifolds **256, 258** and **260.** Disposed in fluid communication with the respective manifolds **242** to **260** are the valve assemblies **222** to **240.** If the valve assemblies **222** to **240** are poppet valves, each may include a disk element connected to a stem element which can be positioned within a bushing or valve guide. The stem element may be connected to an actuating means, such as actuating means (not shown), which is configured to have the respective valve impart linear motion to the respective stem. As may be appreciated, the actuating means may be operated independently for different steps in the process to activate a single valve or a single actuating means may be utilized to control two or more valves. Further, while the openings may be substantially similar in size, the openings and inlet valves for inlet manifolds may have a smaller diameter than those for outlet manifolds, given that the gas volumes passing through the inlets may tend to be lower than product volumes passing through the outlets. Further, while this configuration has valve assemblies **222** to **240,** the number and operation of the valves may vary (e.g., the number of valves) based on the specific cycle being performed.

In swing adsorption processes, the cycle involves two or more steps that each has a certain time interval, which are summed together to be the cycle time. These steps include the regeneration step of the adsorbent bed following the adsorption step or feed step using a variety of methods including pressure swing, vacuum swing, temperature swing, purging (via any suitable type of purge fluid for the process), and combinations thereof. As an example, a swing adsorption cycle may include the steps of adsorption, depressurization, purging, and re-pressurization. When performing the separation at high pressure, depressurization and re-pressurization (which may be referred to as equalization steps) are performed in multiple steps to reduce the pressure change for each step and enhance efficiency. In some swing adsorption processes, such as rapid cycle swing adsorption processes, a substantial portion of the total cycle time is involved in the regeneration of the adsorbent bed. Accordingly, any reductions in the amount of time for regeneration results in a reduction of the total cycle time. This reduction may also reduce the overall size of the swing adsorption system.

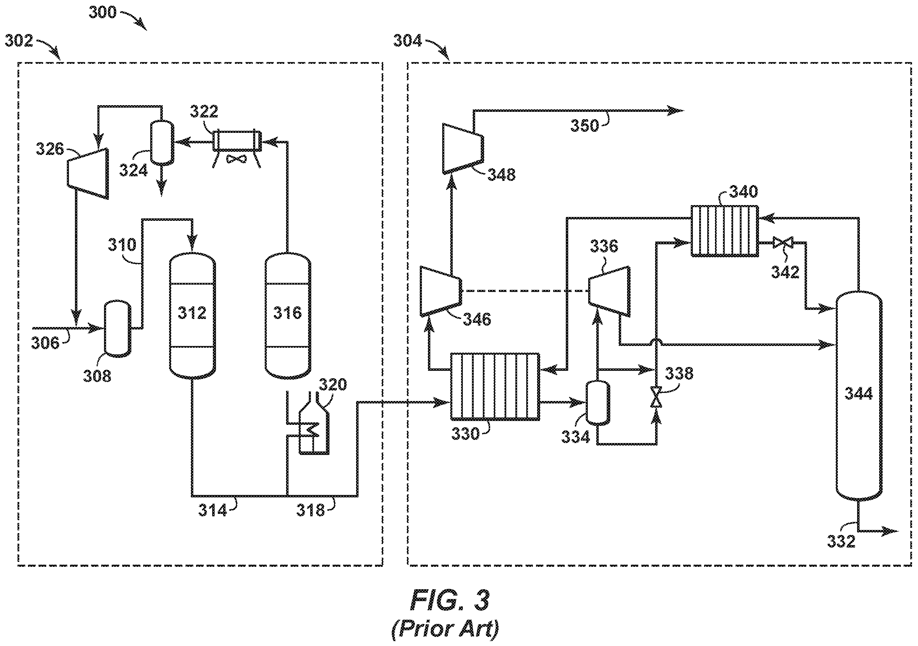

As noted above, conventional systems for dehydration is typically accomplished using TSA molecular sieve adsorption processes and PSA molecular sieve adsorption processes. The conventional systems involve many hours of operation for the molecular sieve unit to both fill with adsorbed species (e.g., water) and to heat for desorption. As a result, the molecular sieve units are very large (e.g., are a large footprint and involve more adsorbent than the present techniques). To minimize the regeneration gas volume required and to maximize bed capacity, the adsorbent beds of the molecular sieve unit is typically dried completely (e.g., below the desired product water activity level), which utilizes a purge gas at or above about 500 °F (260 °C). In addition, the conventional approaches maintain a narrow mass transfer zone, or sharp adsorption front to maximize bed utilization, while maintaining rigorous dehydration. A schematic diagram 300 of a conventional molecular sieve adsorption system **302** integrated into a cryogenic NGL recovery system **304** is shown below in Figure 3.

As an example, Figure 3 is a diagram **300** of a conventional molecular sieve adsorption system **302** for dehydration of a feed stream to form a cryogenic NGL recovery stream for a cryogenic NGL recovery system **304.** As shown in the diagram **300,** various equipment, such as units **308, 312, 316, 320, 322, 324** and **326** in the conventional molecular sieve adsorption system **302** and units **330, 334, 336, 340, 344, 346** and **348** in cryogenic NGL recovery system **304.** The systems **302** and **304** are utilized to process an input stream in conduit **306** to produce an output stream, such as a cryogenic NGL stream in conduit **332.** The cryogenic NGL stream may be provided with approximately 70 molar % of the C₂ and 100 molar % C₃₊ contained in the original feed stream to the NGL process.

For the conventional molecular sieve adsorption system **302,** the units are utilized to perform an adsorption step and a regeneration step in processing the input stream into the cryogenic NGL feed stream. The process begins with an input stream passing through conduit **306** to various units **308** and **312** during an adsorption step. The input stream passes initially into a filter **308,** which is configured to remove at least a portion of particulates and liquid droplets from the input stream. The output stream from the filter **308** is the feed stream, which is provided via conduit **310** to a first molecular sieve unit **312.** The first molecular sieve unit **312** is configure to separate additional contaminants, such as water from the stream. The dehydrated output from the first molecular sieve unit **312** is conveyed away from the first molecular sieve unit **312 in** conduit **314.** A portion of the stream in conduit **314** may be separated and utilized as a regeneration stream for a second molecular sieve unit **316** in a regeneration step. This regeneration stream may be a slip stream from the output stream from the first molecular sieve unit **312** during the adsorption step. The remaining portion of the output stream from the first molecular sieve unit **312** is provided to the cryogenic NGL recovery system **304** via conduit **318** as the cryogenic NGL feed stream.

For the regeneration step, the regeneration stream is passed to a fired heater unit **320,** which is configured to adjust the temperature of the regeneration stream before being passed to the second molecular sieve unit **316.** Then, the resulting molecular sieve regeneration stream is passed from the second molecular sieve unit **316** to a condenser **322.** The condenser **322** is configured to decrease the temperature of the stream to form a liquid phase in the stream. From the condenser **322,** the stream is passed to a separation unit **324,** which is configured to separate the liquid phase from the vapor phase of the stream. The vapor phase is passed as a recycle stream to a recycle compressor **326,** while the liquid phase is conducted away from the process. The recycle compressor **326** compresses the recycle stream from the separation unit **324** to the pressure of the input stream. The compressed recycle stream is then mixed with the input stream and provided to a molecular sieve unit performing the adsorption step in the process, such as first molecular sieve unit **312.**

For the cryogenic NGL recovery system **304,** the cryogenic NGL feed stream is provided from the conventional molecular sieve adsorption system **302** via conduit **318.** In the cryogenic NGL recovery system **304,** the units are utilized to process the cryogenic NGL feed stream and generate a cryogenic NGL output stream conducted away from the system **304** in conduit **332.** The process begins by passing the cryogenic NGL feed stream (e.g., product steam from the absorbent bed unit **410)** into a gas/gas exchanger unit **330** that lowers the temperature (e.g., cools) of the inlet stream by gas-gas temperature exchange with the residual gas (e.g., demethanizer overhead stream) exiting the NGL process. Then, the stream from the gas/gas exchanger unit **330** is provided to a cold separation unit **334,** which separates the stream into a first stream (e.g., a first stream containing the methane and lighter heavy hydrocarbons) and a second stream (e.g., a second stream containing the heaviest of the hydrocarbons). From the cold separation unit **334,** the first stream is conducted toward a turboexpander unit **336,** which is configured to expand the stream to lessen the temperature of the stream, and then the stream is passed to the demethanizer **344.** A slip stream may be separated from the first stream upstream of the turboexpander unit **336,** which is mixed with the second stream upstream of the subcooler unit **340.** The second stream is passed from the cold separation unit **334** through a throttle valve **338** to control mixing ratios and combined with the slip stream from the first stream. The combined stream is passed to the subcooler unit **340** that adjusts the temperature of the stream to the desired temperature for the demethanizer tower. From the subcooler unit **340,** the stream is passed through a throttle valve **342** that controls the feed rate to the demethanizer **344.** The demethanizer **344** is utilized to separate the stream into the cryogenic NGL output stream conducted away from the system **304** in conduit **332** and an overhead stream (e.g., demethanizer overhead stream). The overhead stream is passed to the subcooler unit **340.** Then, from the subcooler unit **340,** the stream is passed to the gas/gas exchanger unit **330.** From the gas/gas exchanger unit **330** the stream is passed to the compressor **346.** The compressor **346** compresses the stream and passes the compressed stream passes the compressed stream to the boost compressor **348.** The boost compressor **348** further increases the pressure of the stream into a boost output stream that is conducted away from the process via conduit **350.** The boost output stream may be used for sales gas or utilized in other processes.

In this configuration, cryogenic temperatures in the demethanizer **344** by near-isentropic expansion in a turboexpander unit **336.** The work of expansion in the turboexpander unit **336** drives a compressor **346** to partially recompress the lean residue gas from the gas/gas exchanger unit **330.** The boost compressor **348** is utilized to boost the stream (e.g., residue gas from the compressor **346)** to sales pipeline export pressure.

As an example, the input stream may be provided at a flow rate of 200 million standard cubic feet per day (MSCFD) (5.67 million standard cubic meter per day (MSCMD)), at a temperature of about 86 °F (30 °C) and at a pressure of about 1,176 pounds per square inch absolute (psia) (81.08 bara). The input stream may include primarily methane along with other hydrocarbons and contaminants. In particular, the methane (C₁) may be about 92 volume percent (vol. %), the other hydrocarbons (C₂⁺) may be about 8 vol. %, and the water (H₂O) may be about 34 pounds per million standard cubic feet (lb/MSCF) (544 kg/MSCM). The first molecular sieve unit **312** may adjust the stream to form the cryogenic NGL feed stream. The cryogenic NGL feed stream may be provided at a flow rate of 200 million standard cubic feet per day (MSCFD) (5.67 MSCMD), at a temperature of about 85 °F (29 °C) and at a pressure of about 1,150 pounds per square inch absolute (psia) (79.29 bara). Further, the first molecular sieve unit **312** may lessen the water (H₂O) content to less than 1.0 ppm.

The regeneration stream for a second molecular sieve unit 316 may be heated in the fired heater unit **320** to increase the temperature of the regeneration stream. In particular, the regeneration stream may have a flow rate of 16 MSCFD (0.45 MSCMD), may be at a temperature of 550 °F (287.8 °C) and may be at a pressure of 1,150 psia (79.29 bara). This stream may pass through the second molecular sieve unit **316,** condenser **322** and the separation unit **324.** From the separation unit **324,** the recycle stream may have a flow rate of 16 MSCFD (0.45 MSCMD), may be at a temperature of 115 °F (46 °C) and may be at a pressure of 1,125 psia (77.57 bara). This recycle stream may be compressed in the recycle compressor **326** to a pressure of 1,176 psia (81.08 bara).

Further, in the cryogenic NGL recovery system **304,** the cryogenic NGL feed stream may be provided at a flow rate of 200 MSCFD (5.67 MSCMD), at a temperature of about 85 °F (29.4 °C) and at a pressure of about 1,150 pounds per square inch absolute (psia) (79.29 bara). Further, the first molecular sieve unit **312** may lessen the water (H₂O) content to less than 0.1 ppm. The stream from the turboexpander unit **336** may be provided at a flow rate of 150 MSCFD (4.25 MSCMD), at a temperature of about -118 °F (-83.3 °C) and at a pressure of about 347 pounds per square inch absolute (psia) (23.9 bara). The stream provided to the subcooler unit **340** from the demethanizer **344** may be provided at a flow rate of 184 MSCFD (5.21 MSCMD), at a temperature of about -147 °F (-99.4 °C) and at a pressure of about 345 pounds per square inch absolute (psia) (23.8 bara). Further, the stream provided from the compressor **346** to the boost compressor **348** may be provided at a flow rate of 184 MSCFD (5.21 MSCMD), at a temperature of about 83 °F (28.3 °C) and at a pressure of about 436 pounds per square inch absolute (psia) (30.1 bara). The stream from the boost compressor **348** may be provided at a flow rate of 184 MSCFD (5.21 MSCMD), at a temperature of about 115 °F (46.1 °C) and at a pressure of about 1,175 pounds per square inch absolute (psia) (81.01 bara). The stream may have a water (H₂O) content of less than 0.1 ppm.

As noted in this example, the regeneration stream (e.g., the purge stream from this process) from the fired heater unit **320** is provided at an elevated temperature of 550 °F (287.8 °C). This high temperature regeneration stream may result in hydrothermal degradation of the adsorbent particles and coke formation within the molecular sieve adsorbent bed leading to deactivation and associated downtime.

Moreover, the particular NGL recovery process may be referred to as the Gas Subcooled Process (GSP) and is suitable for ethane recoveries of up to 90 molar % of the ethane present in the feed stream. As may be appreciated, other cryogenic NGL recovery processes, such as Ortloff's Recycle Split Vapor (RSV) and Single Column Overhead Recycle (SCORE) processes, are well known and can be employed depending on the level of ethane or propane recovery desired. Further, triethylene glycol absorption dehydration system may also be installed upstream at field gathering stations or at the gas plant inlet (not shown) to lessen the feed stream water content below saturation (e.g., about 34 lb/Mscf (544 kg/MSCM) at conditions described in the example) and may lessen loading on the TSA dehydration system needed to meet the cryogenic processing water specification.

In contrast the conventional system in Figure 3, the present techniques provides enhancements in the processing of feed streams with adsorbent beds which may be integrated with recovery equipment. For example, the present techniques utilize PPSA processes to regenerate adsorbent beds at lower temperatures than those utilized in conventional molecular sieve TSA process. Further, this method may be at higher purge gas pressure thus involving less additional compression than PSA approaches. Indeed, the present techniques may be configured to have the purge gas pressure near or at the sales gas pressure to further lessen any compression. As a result, the present techniques overcomes the drawbacks of conventional molecular sieve TSA and PSA approaches by using larger purge gas volumes, not using purge gases heated to higher temperatures (e.g., at above 500 °F (260 °C)) and not using fire heaters for the purge step.

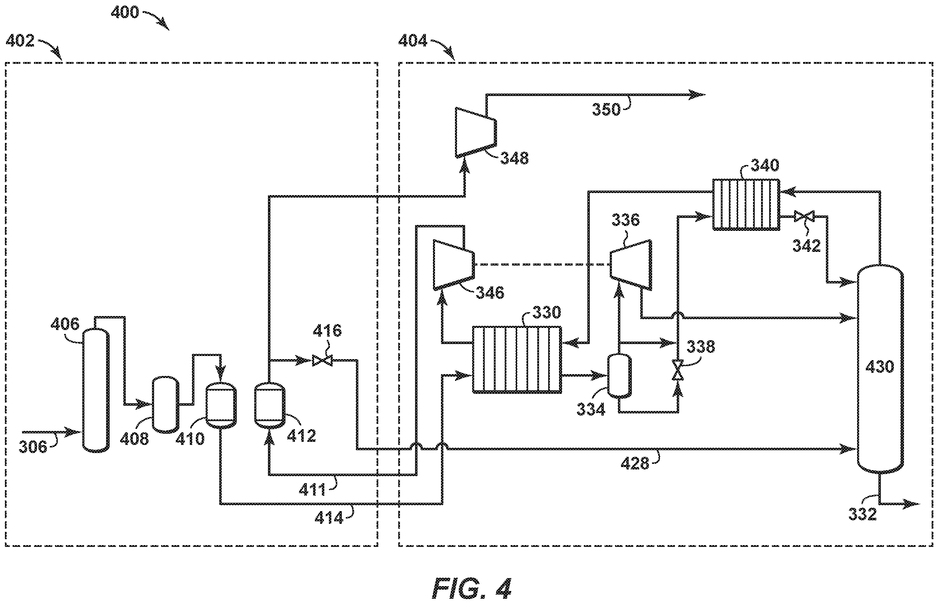

As an example of these enhancements, Figure 4 is an exemplary diagram 400 of the integration of a PPSA dehydration system **402** with a cryogenic NGL recovery system **404** in accordance with an embodiment of the present techniques. In this configuration, the PPSA dehydration system **402** may include one or more adsorbent bed units, such as the adsorbent beds units discussed in Figures 1 and 2, to perform the dehydration for the input stream. The process may involve performing rapid cycle swing adsorption, which involves using the residue gas from a stream provided from the demethanizer **430** (e.g., a demethanizer overhead stream) at a moderately reduced pressure as the purge stream for the adsorbent bed units. Also, by integrating the PPSA dehydration system **402** with a cryogenic NGL recovery system **404,** various enhancements are provided by such a configuration, which are utilized to lessen costs associated with the process. Further, as the quantity of adsorbents varies inversely and linearly with the cycle time, the present techniques provide adsorbent bed units and components that involve a smaller footprint as compared to conventional systems, such as the configuration noted in Figure 3.

In this configuration, various equipment, such as units **406, 408, 410** and **412** in the PPSA dehydration system **402** and units **330, 334, 336, 340, 346, 348** and **430** in cryogenic NGL recovery system **404.** The systems **402** and **404** are utilized to process an input stream in conduit **306** to produce an output stream, such as a cryogenic NGL stream in conduit **332.** These streams may be similar to those noted in the discussion of Figure 3. Further, while certain units may be utilized in a manner similar to that noted above in Figure 3, such as units **330, 334, 336, 340, 346** and **348,** this configuration includes variations on the flow path of the streams between these units to provide various enhancements to the process. In this configuration, energy may be conserved by not using fired heaters to provide a high temperature purge gas as in the conventional molecular sieve TSA process, and substantially all of the methane in the feed stream may be recovered as sales gas.

In the PPSA dehydration system **402,** the units are utilized to perform an adsorption step (e.g., a feed step) and a regeneration step in processing the input stream into the cryogenic NGL feed stream. The process begins with an input stream passing through conduit **306** various units **406, 408** and **410** during an adsorption step. The input stream passes initially into a glycol contactor unit **406,** which is configured to remove at least a portion of the water from the input stream. The output water content from the glycol contactor unit **406** may be adjusted to be below the water level specification for natural gas sales as all of the water fed to the adsorbent bed units may eventually be associated with the methane used for purging the adsorbent beds, and as the heavier hydrocarbons may have been removed, the volume of the stream may be smaller than that of the initial feed stream. Thus, the water in the stream may be at a higher concentration in the sales gas than it is at the outlet of the glycol contactor unit **406.** The output stream from the glycol contactor unit **406** is conducted to the filter unit **408,** which is configured to remove particulates and liquid droplets from the stream. The output from the filter unit **408** is the feed stream. Then, the feed stream is conducted to the first adsorbent bed unit **410.** The first adsorbent bed unit **410** is configure to separate additional contaminants, such as water from the feed stream. For example, the first adsorbent bed unit **410** may be configured to remove a sufficient portion of the H₂O from the stream, such as the water content of the exiting stream may be less than 2.0 ppm, less than 1.0 ppm or less than 0.1 ppm. The dehydrated output from the first adsorbent bed unit **410** is conveyed away from the first adsorbent bed unit **410** in conduit **414,** which is the cryogenic NGL feed stream provided to the cryogenic NGL recovery system **404** as the cryogenic NGL feed stream.

After the adsorption step of the swing adsorption cycle, the pressure is reduced in one or more blowdown steps. The blowdown step or steps may be performed by flowing the stream in the same direction as the feed stream in the adsorption step, and thus the blowdown gas may have low water or other contaminant content. Thus, it is useful to pass this blowdown stream through a valve **416** to the demethanizer **430** via conduit **428.**

For the purge step, the purge stream is passed in a direction counter to the feed stream direction (e.g., a countercurrent direction) to the second adsorbent bed unit **412** from the compressor **346** in the cryogenic NGL recovery system **404.** Then, the purge output stream from the second adsorbent bed **412** is passed to the boost compressor **348.** For the cryogenic NGL recovery system **404,** the cryogenic NGL feed stream is processed in a similar manner, as noted above in the discussion of Figure 3. However, this configuration integrates the flow of streams with the PPSA dehydration system **402.** For example, the cryogenic NGL feed stream is passed to the gas/gas exchanger unit **330** and then processed in the cold separation unit **334,** turboexpander unit **336,** throttle valve **338,** subcooler unit **340** and throttle valve **342,** as noted above. However, in this configuration, the demethanizer **430** receives a blowdown stream from a portion of the output from the second adsorbent bed unit **412,** the output stream from the turboexpander unit **336,** and the output stream from the throttle valve **342.** The demethanizer **430** is utilized to separate the stream into the cryogenic NGL output stream (e.g., a final product stream) conducted away from the system **404** in conduit **332** and an overhead stream. The overhead stream is passed to the subcooler unit **340,** through the gas/gas exchanger unit **330** and to the compressor **346.** Then, the output stream from the compressor **346** in the cryogenic NGL recovery system **404** is passed as the purge stream through the second adsorbent bed unit **412** in the PPSA dehydration system **402** via conduit **411,** as noted above. Optionally a portion of the purge stream in conduit **411** may be diverted to bypass the second adsorbent bed unit **412.** The purge output stream may be passed to the boost compressor **348** in the cryogenic NGL recovery system **404** from the second adsorbent bed unit **412** in the PPSA dehydration system **402.** The boost compressor **348** further increases the pressure of the stream into a boost output stream that is conducted away from the process via conduit **350.** The boost output stream may be used for sales gas or utilized in other processes. In other configurations, the purge output stream may be provided at a pressure near or at the sales gas pressure to further lessen compression steps. The pressure of the purge output stream may be within a range of 10% of the sales gas pressure of the sales gas stream in conduit **350.**

This configuration utilizes a purge stream that is at lower temperatures compared to conventional molecular sieve approaches. The adsorbent bed units **410** and **412,** which may be used in a rapid cycle swing adsorption process, are regenerated in a purge step with residue gas from a stream provided from the demethanizer **430** (e.g., a demethanizer overhead stream) at a moderately reduced pressure. In this configuration, the demethanizer overhead stream is used as purge gas after heating and partial recompression in the compressor **346,** which is driven by the turboexpander unit **336.** Depending on the NGL content of the feed stream and the extent of NGL recovery, the purge gas flow rate may be in the range between 70 volume % and 95 volume % of the feed flow rate or in a range between 90 volume % and 95 volume % of the feed flow rate. The feed stream may involve pressure in a range between 900 (62.1 bara) and 1,200 psia (82.73 bara) (or in a range between 1100 (75.84 bara) and 1,200 psia (82.73 bara)), while the demethanizer **430** may operate at pressure in the range between 300 psia (20.7 bara) and 600 psia (41.4 bara) range, and the purge gas pressure after the compressor **346** may be in the range between 400 psia (27.58 bara) and 600 psia (41.4 bara). As an example, the feed stream pressure may be 1,175 psia (81.01 bara), the demethanizer may operate at a pressure of 345 psia (23.8 bara), the purge gas pressure may be 436 psia (30.1 bara) and thus the adsorbent bed pressure swings from about 1,160 psia (79.98 bara) to 430 psia (29.65 bara). In this configuration, the purge gas temperature is similar to the feed stream temperature because of extensive heat integration that is involved in NGL recovery plants. For example, the feed stream temperature may be a temperature of about 85 °F (29 °C), the demethanizer overhead stream is heated in a subcooler unit **340** and the gas/gas exchanger from -147 °F (-99.4 °C) to 83 °F (28 °C) by heat exchange with the dry rich gas and through the effect of partial recompression in the turboexpander unit **336** coupled to the compressor **346.** Thus, the adsorbent bed temperature may change small amounts during the adsorption step and desorption step (e.g. the purge step) of the cycle. With similar feed stream and purge stream flow rates and adsorption step and desorption step (e.g., for a time period of twenty-four and sixteen seconds, respectively, in a forty-eight second cycle), the pressure swing and purge step at near constant bed temperature is sufficient to regenerate the adsorbent bed in the adsorbent bed units.

As an example, three adsorbent beds may be used to treat 200 MSCFD (5.67 MSCMD) of wet feed stream, where each adsorbent bed unit has a diameter of 0.25 meters (m) and a length of 0.60 m. In this example, each bed is composed of adsorbent-coated parallel channels arranged in a monolith with over 2,000 channels per square inch, where each uncoated channel is 500 by 500 micron in cross-section, and the channels are separated by 25.4 micron steel walls and coated internally with a 60 micron layer of porous adsorbent. In this example, the typical heat capacity of the adsorber bed was about 3.0 Joules per gram adsorbent per degree Kelvin (J/g adsorbent/K). Each adsorbent bed contains a total of about 22 kilograms (kg) of adsorbent giving a total of 66 kg for the process. In addition, the present techniques do not require a narrow mass transfer zone, thus a wide range of adsorbents can be used for rigorous water removal. These include but are not limited to silica gel, Zeolite 3A, 4A and 5A.

These adsorbent bed units may be used in the configuration of Figure 4. In particular, the input stream may be provided at a flow rate of 200 million standard cubic feet per day (MSCFD) (5.67 MSCMD), at a temperature of about 86 °F (30 °C) and at a pressure of about 1,175 pounds per square inch absolute (psia) (81.01 bara). The input stream may include primarily methane along with other hydrocarbons and contaminants. By way of example, the methane (C₁) may be about 92 volume percent (vol. %), the other hydrocarbons (C₂₊) may be about 8 vol. %, and the water (H₂O) may be about 34 lb/MSCF (544 kg/MSCM). The stream from the glycol contactor unit **406** may be provided at a flow rate of 200 MSCFD (5.67 MSCMD), at a temperature of about 86 °F (30 °C) and at a pressure of about 1,175 pounds per square inch absolute (psia) (81.01 bara). The stream may include primarily methane and the water (H₂O) may be about 5 lb/MSCF (80 kg/MSCM). The stream is then passed through the filter **408** and provided to the first adsorbent bed unit 410 may adjust the stream to form the cryogenic NGL feed stream. The cryogenic NGL feed stream from the first adsorbent bed unit **410** may be provided at a flow rate of 198 MSCFD (5.61 MSCMD), at a temperature of about 85 °F (29 °C) and at a pressure of about 1,155 psia (79.63 bara). Further, the first adsorbent bed unit **410** may lessen the water (H₂O) content to less than 1.0 ppm.

For the regeneration, the purge stream is provided to the second adsorbent bed unit **412** may have a flow rate of 184 MSCFD (5.21 MSCMD), may be at a temperature of 83 °F (28 °C) and may be at a pressure of 436 psia (30.1 bara). From the second adsorbent bed unit **412,** the purge vent stream may have a flow rate of 182 MSCFD (5.16 MSCMD), may be at a temperature of 82 °F (28 °C) and may be at a pressure of 424 psia (29.2 bara), while the blowdown stream may have a flow rate of 2 MSCFD (0.06 MSCMD), may be at a temperature of 84 °F (29 °C) and may be at a pressure of 435 psia (30.0 bara).

Further, in the cryogenic NGL recovery system **404,** the cryogenic NGL feed stream from the first adsorbent bed unit **410** may be provided to the gas/gas exchanger unit **330** at a flow rate of 198 MSCFD (5.61 MSCMD), at a temperature of about 85 °F (29 °C) and at a pressure of about 1,155 psia (79.63 bara). Further, the first adsorbent bed unit **410** may lessen the water (H₂O) content to less than 0.1 ppm. Further, the stream provided from the turboexpander unit **336** to the demethanizer **430** may be provided at a flow rate of 149 MSCFD (4.22 MSCMD), at a temperature of about -119 °F (-83.9 °C) and at a pressure of about 347 pounds per square inch absolute (psia) (23.9 bara), while the stream from the subcooler unit **340** to the demethanizer **430** may be provided at a flow rate of 49 MSCFD (1.4 MSCMD), at a temperature of about -119 °F (-83.9 °C) and at a pressure of about 347 pounds per square inch absolute (psia) (23.9 bara). From the demethanizer **430,** the overhead stream (e.g., demethanizer overhead flow rate) may be provided at a flow rate of 184 MSCFD (5.21 MSCMD), at a temperature of about -147 °F (-99.4 °C) and at a pressure of about 345 pounds per square inch absolute (psia) (23.8 bara). Further, the stream provided from the compressor **346** to the second adsorbent bed unit **412** may be provided at a flow rate of 184 MSCFD (5.21 MSCMD), at a temperature of about 83 °F (28 °C) and at a pressure of about 436 pounds per square inch absolute (psia) (30.1 bara). Further, the stream from the boost compressor **348** may be provided at a flow rate of 184 MSCFD (5.21 MSCMD), at a temperature of about 115 °F (46.1 °C) and at a pressure of about 1,175 pounds per square inch absolute (psia) (81.01 bara). The stream may have a water (H₂O) content of less than about 5.4 lb/MSCF (86 kg/MSCM).

In this diagram **400,** the adsorbent beds are regenerated via a purge step with a purge stream that is from the overhead stream of the demethanizer **430.** The purge streammay have a composition substantially similar to that of the overhead stream from the demethanizer **430** and be at a flow rate that is substantially similar, as well. For example, the flow rate of the purge stream may be associated with the flow rate of the demethanizer overhead stream from the demethanizer **430.** The purge stream may comprise at least 20 volume % of the demethanizer overhead stream, at least 50 volume % of the demethanizer overhead stream, at least 80 volume % of the demethanizer overhead stream or at least 95 volume % of the demethanizer overhead stream. For example, in the configuration of diagram **400,** the purge stream comprises the demethanizer overhead flow rate (e.g., about 100 volume %).

Further, in this configuration, the purge stream is provided at a temperature substantially similar to the temperature of the feed stream. For example, the purge stream is provided at a temperature substantially similar to the temperature of the feed stream. The purge stream temperature may be within a range from 25 °F below the feed temperature (13.9 °C below the feed temperature) and 350 °F above the feed temperature (194 °C above the feed temperature), within a range from 25 °F below the feed temperature (13.9 °C below the feed temperature) and 200 °F above the feed temperature (111.1 °C above the feed temperature) or within a range from 25 °F below the feed temperature (13.9 °C below the feed temperature) and 50 °F above the feed temperature (27.8 °C above the feed temperature). The purge stream temperature may be within a range from 10 °F below the feed temperature (5.6 °C above the feed temperature) and 350 °F above the feed temperature (194 °C above the feed temperature), within a range from 10 °F below the feed temperature (5.6 °C above the feed temperature) and 200 °F above the feed temperature (111.1 °C above the feed temperature) or within a range from 10 °F below the feed temperature (5.6 °C below the feed temperature) and 50 °F above the feed temperature (27.8 °C above the feed temperature). In other configurations, the temperature of the purge stream may be sufficiently close to the feed temperature. For example, the purge temperature may be in a range from 10°F below the feed temperature (5.6 °C below the feed temperature) and 25°F above the feed temperature (13.9 °C above the feed temperature), in a range from 10°F below (5.6 °C below the feed temperature) the feed temperature and 10°F above the feed temperature (5.6 °C above the feed temperature), within a range from 7°F below the feed temperature (3.9 °C below the feed temperature) and 7°F above the feed temperature (3.9 °C above the feed temperature) or within a range from 5°F below the feed temperature (2.8 °C below the feed temperature) and 5°F above the feed temperature (2.8 °C above the feed temperature).

Beneficially, this configuration may remove any additional heat exchanger or furnace from the process flow. Further, the purge stream may be provided at lower temperature and higher volumes than other processes. As the purge stream is provided at a lower temperature, it involves less heat than the regenerated gas in the conventional TSA process of Figure 3 even through the volume of the purge stream is larger.

The enhancements of the present techniques are further illustrated by comparing the two processes. For example, to perform the same dehydration of a feed stream, the process in the conventional molecular sieve process, as noted in Figure 3, the purge stream temperature is 500 °F (260 °C) or higher, while the rapid cycle partial pressure purge swing adsorption utilizes a purge stream at 83 °F (28.3 °C). Further, the present techniques utilize less adsorbent material as compared to the conventional molecular sieve process. For example, the adsorbent utilized in the configuration of Figure 4 is 44kg, while the conventional TSA molecular sieve process in Figure 3 requires three adsorbent beds, each containing about 38,000 kg of zeolite 4A adsorbent for a total of 114,000 kg of adsorbent. Thus, the conventional process is a factor of 1,300 larger than the process of the present techniques. Accordingly, each of the two adsorbent bed units of the configuration of Figure 4 has a diameter of 0.25 m and a length of 0.60 m, while the unit for the conventional TSA molecular sieve process are roughly 1.4 m in diameter and 6.7 m long. Thus, the footprint for the present techniques is significantly less than the conventional TSA molecular sieve process. This configuration may be adjusted for different pressures, temperatures, flow rates, durations, bed counts, dimensions and weights.

In one or more embodiment, the glycol contactor unit **406** may be a tri-ethylene glycol (TEG) dehydration process may be used on the input stream at the inlet, upstream of the PPSA dehydration process. This unit may be used to reduce the water loading of the dehydration process, and to provide the flexibility to adjust the sales gas water content. As shown above in the example, the sales gas water content from the integrated process may be about 5.4 lb/Mscf (86 kg/MSCM) assuming the stream provided to the PPSA dehydration system **402** has been dehydrated in the field or at the plant inlet to 5.0 lb/Mscf (80 kg/MSCM). The slight increase is due to the removal of the NGLs which causes 5 molar % to 10 molar % shrinkage of the sales gas volume relative to the feed stream volume, depending on the depth of NGL recovery achieved. Thus, the glycol system can be used to meet the sales gas specification by removing sufficient water to account for the shrinkage. Modeling shows that this has negligible effect on the economics of the integrated process.

In other embodiments, other NGL recovery processes, such as RSV and SCORE, can be integrated in a similar manner with PPSA dehydration system in this configuration by using the demethanizer overhead stream (e.g., residue gas) to purge the adsorbent beds and recover the water to the sales gas.

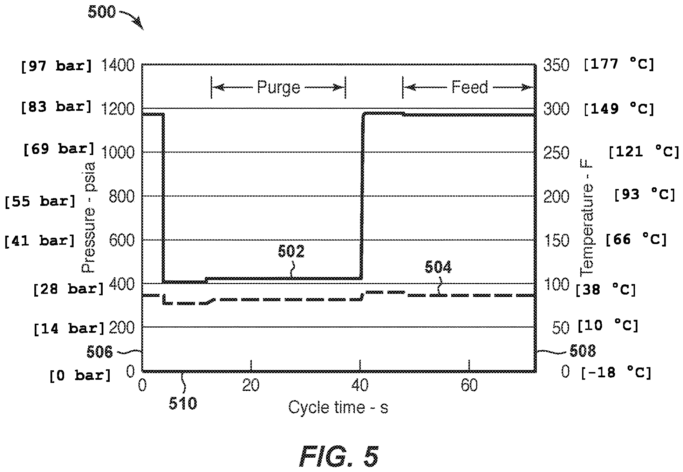

Figure 5 is exemplary chart **500** associated with the configuration in Figure 4 in accordance with an embodiment of the present techniques. The diagram **500** describes the timing and steps for an exemplary cycle of the swing adsorption process. In diagram **500,** the bed pressure response **502** and the bed temperature response **504** are shown along pressure axis **506** in psia [bara], the temperature axis **508** in °F [°C] with respect to the cycle time axis **510** in seconds (s) for the steps in an exemplary cycle. The cycle time is show in Table 1 below:

**Table 1: Cycle Timing**

| Step | Time | Direction |
|---|---|---|
| Hold | 4 seconds | None |
| Blowdown | 8 seconds | Counter-flow |
| Purge | 24 seconds | Counter-flow |
| Hold | 4 seconds | None |
| Feed Repressurize | 8 seconds | Co-flow |
| Adsorption or Feed | 24 seconds | Co-flow |

As shown in Table 1 and the chart **500,** the cycle includes performing various steps in specific flow directions relative to the flow of the feed stream (e.g., co-flow is in the same direction as the feed stream and counter-flow is in the direction opposite of the feed stream through the adsorbent bed). For example, a hold step for four second, a blowdown step for eight seconds, a purge step for twenty-four seconds (e.g., from twelve seconds into the cycle to thirty-six seconds into the cycle), a second hold step for four seconds, a repressurize step for eight seconds and then an adsorption step for twenty-four seconds (e.g., from forty-eight seconds into the cycle to seventy-two seconds into the cycle). The resulting duration for a single cycle in this configuration is seventy-two seconds. The temperature, as shown along the temperature response **504** is relatively stable throughout the cycle, while the pressure within the adsorbent bed unit is lower during the purge and blowdown steps as compared with the adsorption step and feed repressurize step.

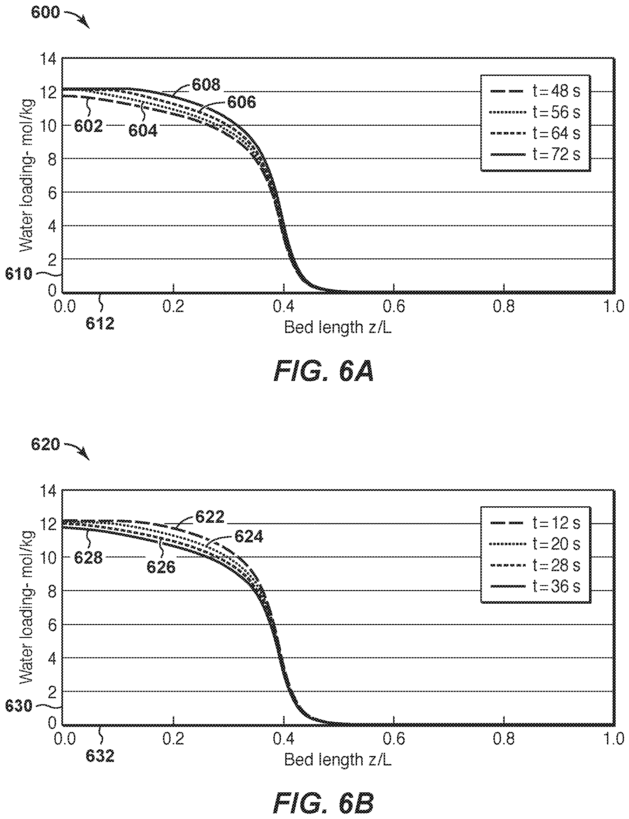

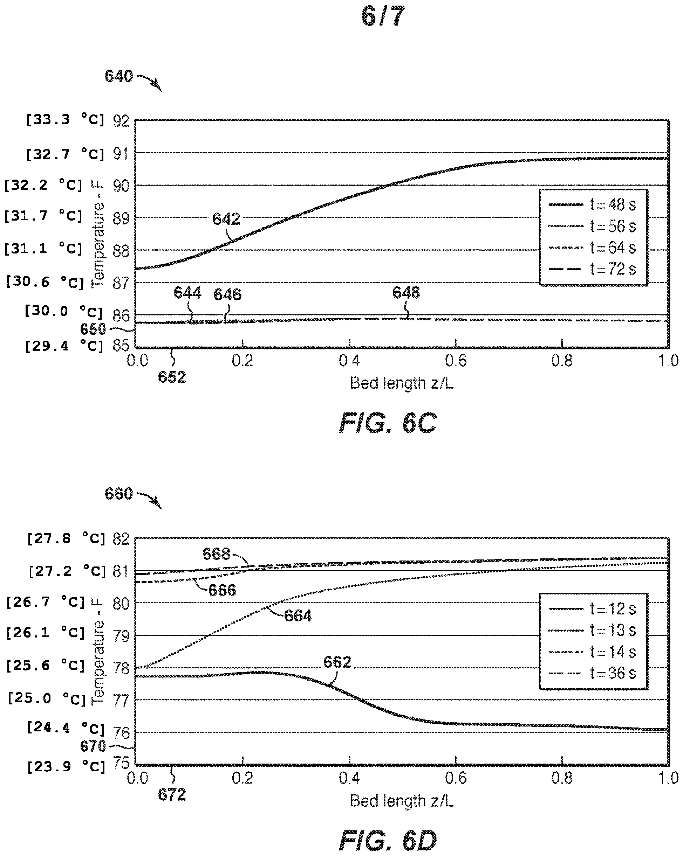

Figures 6A, 6B, 6C and 6D are exemplary diagrams **600, 620, 640** and **660** associated with the configuration in Figure 4 in accordance with an embodiment of the present techniques. In these diagrams **600, 620, 640** and **660,** the cycle may include performing a hold step for four second, a blowdown step for eight seconds, a purge step for twenty-four seconds (e.g., from 12 seconds into the cycle to 36 seconds into the cycle), a second hold step for four seconds, a repressurize step for eight seconds and then an adsorption step for twenty-four seconds (e.g., from 48 seconds into the cycle to 72 seconds into the cycle). The resulting duration for a single cycle in this configuration is seventy-two seconds. These diagrams **600** and **620** further describe water loading for the timing of the steps in an exemplary cycle of the swing adsorption process, while the diagrams **640** and **660** further describe temperature for the timing of the steps in an exemplary cycle of the swing adsorption process.

For Figure 6A, the water loading responses **602, 604, 606** and **608** in the diagram **600** are shown along water loading axis **610** in moles per kilogram (mol/kg) with respect to the bed length axis **612** in normalized bed length (z/L). The response **602** represents forty-eight seconds into the cycle, the response **604** represents fifty-six seconds into the cycle, the response **606** represents sixty-four seconds into the cycle and the response **608** represents seventy-two seconds into the cycle. Each of these responses **602, 604, 606** and **608** are the water loading at the various times during the adsorption step. The leading edge of the adsorption front for each of the responses **602, 604, 606** and **608** does not increase in the latter region of the adsorbent bed (e.g., product region or portion near the product end). In particular, for this example, the product region of the adsorbent bed is the portion of the absorbent bed from the product end to about 50% of the bed length from the product end of the adsorbent bed and is maintained with a water loading for the product region less than about 1 mole per kilogram (mol/kg).

For Figure 6B, the water loading responses **622, 624, 626** and **628** in diagram **620** are shown along water loading axis **630** in mol/kg with respect to the bed length axis **632** in z/L. The response **622** represents twelve seconds, the response **624** represents twenty seconds, the response **626** represents twenty-eight seconds and the response **628** represents thirty-six seconds and shows the progression of the water loading from the adsorbent bed during the purge step. As shown on this diagram **620,** the water loading decreases as the purge step continues from the initial time of twelve seconds into the cycle (e.g., response **622)** to the end of the purge step at time of thirty-six seconds into the cycle (e.g., response **628).** For the duration of this purge step, the water loading for the product region, as defined in Figure 6A, is less than about 1 mol/kg.

In this configuration, the purge step removes water from the adsorbent bed. For example, the highest content of water is at the end of the adsorption step (e.g., response **608**)**,** while the lowest content of water is at the end of the purge step (e.g., response **628**)**.** As indicated by the responses **622, 624, 626** and **628,** the swing capacity of the adsorbent bed in this cycle is a small fraction of the total bed capacity. The extreme reduction in adsorbent bed size is due to the use of rapid cycles, as compared to conventional TSA dehydration beds, and provides an enhanced technique for dehydration, while only regenerating a portion of the total bed capacity in each regeneration cycle.

In Figure 6C, the temperature response **642, 644, 646** and **648** in diagram **640** are shown along the temperature axis **650** in °F [°C] with respect to the bed length axis **652** in z/L. The response **642** represents forty-eight seconds into the cycle, the response **644** represents fifty-six seconds into the cycle, the response **646** represents sixty-four seconds into the cycle and the response **648** represents seventy-two seconds into the cycle. These responses show the progression of the temperature of the adsorbent bed during the adsorption step or feed step. As shown on this diagram **640,** the temperature of the adsorbent bed decreases as the adsorption step continues from the initial time of forty-eight seconds (e.g., response **642)** to the end of the adsorption step at time of seventy-two seconds (e.g., response **648).**

In Figure 6D, the temperature response **662, 664, 666** and **668** in diagram **660** are shown along the temperature axis **670** in °F [°C] with respect to the bed length axis **672** in z/L. The response **662** represents twelve seconds into the cycle, the response **664** represents thirteen seconds into the cycle, the response **666** represents fourteen seconds into the cycle and the response **668** represents thirty-six seconds into the cycle. These responses show the progression of the temperature of the adsorbent bed during the purge step. As shown on this diagram **660,** the temperature of the adsorbent bed increases as the purge step continues from the initial time of twelve seconds (e.g., response **662**) to the end of the purge step at time of thirty-six seconds (e.g., response **668**)**.**

As another example, the present techniques may include a cryogenic controlled freeze zone recovery system as the cryogenic recovery system. The cryogenic controlled freeze zone is a cryogenic distillation process that separates methane from gas streams containing large amounts of CO₂. The system includes a refluxed demethanizer with a freeze zone in the middle to facilitate freezing and re-melting of the CO₂, as is known by one skilled in the art. A demethanizer overhead stream (e.g., a clean vapor methane stream) is obtained as the top product from the demethanizer of the CFZ process, while a final product stream (e.g., high pressure acid liquid product) is obtained as the bottoms product. Any heavier hydrocarbons in the feed to the CFZ recovery system are also removed as the bottoms product. For this process, dehydration is necessary upstream of the cryogenic CFZ recovery system to ensure that hydrates do not form in the cryogenic equipment. Further, in this configuration, water may be removed upstream of CFZ (e.g., with a swing adsorption process or other suitable process) and heavy hydrocarbons may also be removed upstream of the CFZ (e.g., with a swing adsorption process or other suitable process), which may lessen loss of certain hydrocarbons in the bottom product.

The dehydration of the feed stream for the cryogenic CFZ recovery system may the use rapid cycle swing adsorption processes and units to dehydrate this stream. In the cryogenic controlled freeze zone recovery system, various steps may be utilized to dehydrate the stream. For example, the steps may be similar to the steps used in a configuration of Figure 4. As noted above for Figure 4, the purge stream may be at least a portion of the demethanizer overhead stream, which may be the vapor methane stream from the CFZ process in the CFZ system. This purge stream may be provided at pressures in the range between 450 psia (31.03 bara) and 650 psia (44.82 bara). As an example of the dehydration process steps, the adsorbent bed unit is initially repressurized and then a feed stream is dehydrated in an adsorption step. Following the adsorption step, the adsorbent bed is subjected to various regeneration steps. The regeneration steps include one or more blowdown steps, which each may lessen the pressure within the adsorbent bed unit and the final pressure may be slightly below the purge pressure. Following the blowdown steps, one or more purge steps may be performed, wherein each purge step may be provided in a counter current flow direction relative to the feed stream flow direction. The purge stream (e.g., primarily methane stream) may remove the contaminants from the adsorbent bed. In certain configurations, heat may also be added to the process to further enhance the process.

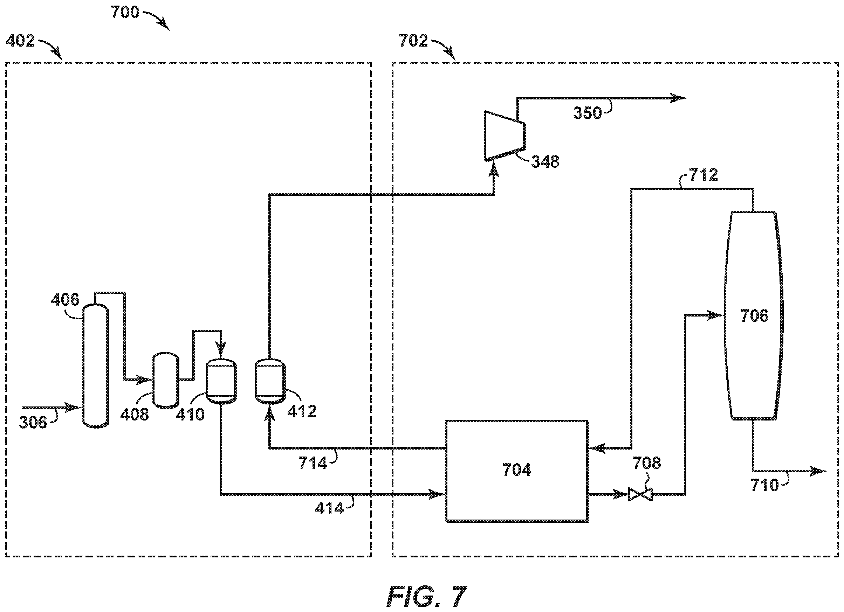

As an example of these enhancements, Figure 7 is an exemplary diagram **700** of the integration of a PPSA dehydration system **402** with a cryogenic CFZ recovery system **702** in accordance with an embodiment of the present techniques. In this configuration, the PPSA dehydration system **402** may include one or more adsorbent bed units, such as the adsorbent beds units discussed in Figures 1 and 2, to perform the dehydration for the input stream. The process may involve performing rapid cycle swing adsorption, which involves using the residue gas from a stream provided from the demethanizer **704** (e.g., a demethanizer overhead stream) at a purge pressure, within the range between 450 psia (31.03 bara) and 650 psia (44.82 bara), for example, as the purge stream for the adsorbent bed units. Also, by integrating the PPSA dehydration system **402** with a cryogenic CFZ recovery system **702,** various enhancements are provided by such a configuration, which are utilized to lessen costs associated with the process. Further, as the quantity of adsorbents varies inversely and linearly with the cycle time, the present techniques provide adsorbent bed units and components that involve a smaller footprint as compared to conventional CFZ systems.

In this configuration, various equipment, such as units **406, 408, 410** and **412** in the PPSA dehydration system **402** and units **704, 706** and **708** in cryogenic CFZ recovery system **702,** may be used in the process. The systems **402** and **702** are utilized to process an input stream in conduit **306** to produce a final output stream, such as a cryogenic CFZ stream in conduit **710.** The streams in the dehydration system **402** may be similar to the streams noted in the discussion of Figure 4. Further, while certain units may be utilized in a manner similar to that noted above in Figure 4, such as units **406, 408, 410, 348** and **412,** this configuration includes variations on the flow path of the streams between these units to provide various enhancements to the process. In this configuration, energy may also be conserved by not using fired heaters and substantially all of the methane in the feed stream may be recovered as sales gas.

In the PPSA dehydration system **402,** the units are utilized to perform an adsorption step (e.g., a feed step) and a regeneration step in processing the input stream into the cryogenic CFZ feed stream. The process begins with an input stream passing through conduit **306** various units **406, 408** and **410** during an adsorption step. The first adsorbent bed unit **410** is configure to separate additional contaminants, such as water from the feed stream. For example, the first adsorbent bed unit **410** may be configured to remove a sufficient portion of the H₂O from the stream, such as the water content of the exiting stream may be less than 2.0 ppm, less than 1.0 ppm or less than 0.1 ppm. The dehydrated output from the first adsorbent bed unit **410** is conveyed away from the first adsorbent bed unit 410 in conduit **414,** which is the cryogenic CFZ feed stream provided to the cryogenic CFZ recovery system **702** as the cryogenic CFZ feed stream.

In the cryogenic CFZ recovery system **702,** the cryogenic CFZ feed stream is passed to the conditioning unit **704.** In the conditioning unit **704,** the cryogenic CFZ feed stream is conditioned and then passed through throttle valve **708** to the CFZ demethanizer **706.** The CFZ methanizer **706** includes a refluxed demethanizer with a freeze zone in the middle to facilitate freezing and re-melting of the CO₂, as is known by one skilled in the art. The CFZ demethanizer **706** may separate the stream from the throttle valve **708** into a demethanizer overhead stream, which is a vapor stream containing primarily methane, and a final product stream, which is a high pressure acid liquid product stream. The final product stream may be conducted away from the cryogenic CFZ recovery system **702** via conduit **710,** as a product CFZ stream. The demethanizer overhead stream may be passed to the conditioning unit **704** via conduit **712,** which may be conducted away to the PPSA dehydration system **402** via conduit **714** to be used as the purge stream.

After the adsorption step of the swing adsorption cycle, the pressure is reduced in one or more blowdown steps and then one or more purge steps are performed. The blowdown step or steps may be performed by flowing the stream in the same direction as the feed stream in the adsorption step, and thus the blowdown gas may have low water or other contaminant content. For the purge step, the purge stream, which is at least a portion of the demethanizer overhead stream from conduit **714,** may be passed in a direction counter to the feed stream direction (e.g., a countercurrent direction) to the second adsorbent bed unit **412.** Then, the purge output stream from the second adsorbent bed **412** is passed to the boost compressor **348.** Optionally a portion of the purge stream in conduit **712** or **714** may be diverted to bypass the conditioning unit **704** and/or second adsorbent bed unit **412.** The purge stream may remove at least a portion of the contaminants from the adsorbent bed and be conducted away from the adsorbent bed unit **412** to the boost compressor **348.** The boost compressor **348** further increases the pressure of the stream into a boost output stream that is conducted away from the process via conduit **350.** The boost output stream may be used for sales gas or utilized in other processes. In other configurations, the purge output stream may be provided at a pressure near or at the sales gas pressure to further lessen compression steps. The pressure of the purge output stream may be within a range of 10% of the sales gas pressure of the sales gas stream in conduit **350.**

Further, in other embodiments, the heavy hydrocarbons from the feed stream to the CFZ process may be removed by the rapid cycle swing adsorption process. The removal of heavy hydrocarbons may involve a separate set of adsorbent bed units or may be integrated with the adsorbent bed units represented by adsorbent bed units **410** and **412.** In such configurations, the purge stream may utilize more of the demethanizer overhead stream, which may also be provided at an elevated temperature to further enhance the process.

In one or more embodiments, the material may include an adsorbent material supported on a non-adsorbent support. Non-limiting examples of adsorbent materials may include alumina, microporous zeolites, carbons, cationic zeolites, high silica zeolites, highly siliceous ordered mesoporous materials, sol gel materials, aluminum phosphorous and oxygen (ALPO) materials (microporous and mesoporous materials containing predominantly aluminum phosphorous and oxygen), silicon aluminum phosphorous and oxygen (SAPO) materials (microporous and mesoporous materials containing predominantly silicon aluminum phosphorous and oxygen), metal organic framework (MOF) materials (microporous and mesoporous materials comprised of a metal organic framework) and zeolitic imidazolate frameworks (ZIF) materials (microporous and mesoporous materials comprised of zeolitic imidazolate frameworks). Other materials include microporous and mesoporous sorbents functionalized with functional groups. Examples of functional groups, which may be used for CO₂ removal, may include primary, secondary, tertiary amines and other non protogenic basic groups such as amidines, guanidines and biguanides.

In one or more embodiments, the adsorbent bed unit may be utilized to separate contaminants from a feed stream. The method may include passing a gaseous feed stream at a feed pressure through an adsorbent bed unit having an adsorbent contactor to separate one or more contaminants from the gaseous feed stream to form a product stream, wherein the adsorbent contactor has a first portion and a second portion; interrupting the flow of the gaseous feed stream; performing a depressurization step, wherein the depressurization step reduces the pressure within the adsorbent bed unit; performing a purge step, wherein the purge step reduces the pressure within the adsorbent bed unit and wherein the purge step involves passing a purge stream to a mid-purge distribution zone between first portion and the second portion; performing a re-pressurization step, wherein the re-pressurization step increases the pressure within the adsorbent bed unit; and repeating the steps a) to e) for at least one additional cycle.

Further, in one or more embodiments, the adsorbent bed unit may include an adsorbent bed that can be used for the separation of a target gas form a gaseous mixture. The adsorbent is usually comprised of an adsorbent material supported on a non-adsorbent support, or contactor. Such contactors contain substantially parallel flow channels wherein 20 volume percent, preferably 15 volume percent or less of the open pore volume of the contactor, excluding the flow channels, is in pores greater than about 20 angstroms. A flow channel is taken to be that portion of the contactor in which gas flows, if a steady state pressure difference is applied between the points or places at which a feed stream enters the contactor and the point or place at which a product stream leaves the contactor. In the contactor, the adsorbent is incorporated into the wall of the flow channel.

In one or more embodiments, the rapid cycle swing adsorption process in the present techniques is a rapid cycle temperature swing adsorption (RCTSA) and a pressure swing adsorption (PSA). For example, the total cycle times are typically less than 600 seconds, less than 300 seconds, preferably less than 200 seconds, more preferably less than 90 seconds, and even more preferably less than 60 seconds.

In view of the many possible embodiments to which the principles of the disclosed invention may be applied, it should be recognized that the illustrative embodiments are only preferred examples of the invention and should not be taken as limiting the scope of the invention.

## Claims

1. A cyclical swing adsorption process for removing contaminants from a gaseous feed stream comprising methane, the process comprising:
a) performing one or more adsorption steps, wherein each of the adsorption steps comprises passing a gaseous feed stream at a feed pressure and feed temperature through an adsorbent bed unit (410) to remove one or more contaminants from the gaseous feed stream and to form a product stream that is passed to a cryogenic recovery system (404) including a demethanizer (430), wherein at least a portion of the product stream is passed to the demethanizer (430) to separate the at least portion of the product stream into a final product stream and a demethanizer overhead stream comprising methane;
b) performing one or more depressurization steps, wherein the pressure of the adsorbent bed unit (410) is reduced by a predetermined amount with each successive depressurization step;
c) performing one or more purge steps, wherein each of the purge steps comprises passing a purge stream through the adsorbent bed unit (410) in a counter flow direction relative to the flow of the gaseous feed stream to form a purge product stream, wherein the purge stream comprises at least a portion of the demethanizer overhead stream from the demethanizer (430);
d) performing one or more re-pressurization steps, wherein the pressure within the adsorbent bed unit (410) is increased with each re-pressurization step by a predetermined amount with each successive re-pressurization step; and
e) repeating the steps a) to d) for at least one additional cycle.

2. The cyclical swing adsorption process of claim 1, wherein the purge stream comprises at least 20 volume % of the demethanizer overhead stream, preferably at least 50 volume % of the demethanizer overhead stream, more preferably at least 95 volume % of the demethanizer overhead stream.

3. The cyclical swing adsorption process of any one of claims 1 to 2, wherein the purge stream is at a purge temperature within a range between 10 °F below the feed temperature (5.6 °C below the feed temperature) and 350 °F above the feed temperature (194 °C above the feed temperature).

4. The cyclical swing adsorption process of any one of claims 1 to 2, wherein the purge stream is at a purge temperature within a range from 10 °F below the feed temperature (5.6 °C below the feed temperature) and 25 °F above the feed temperature (13.9 °C above the feed temperature).

5. The cyclical swing adsorption process of any one of claims 1 to 4, wherein the cycle duration is greater than 1 second and less than 600 seconds.

6. The cyclical swing adsorption process of any one of claims 1 to 5, wherein the gaseous feed stream is a hydrocarbon containing stream having greater than one volume percent hydrocarbons based on the total volume of the feed stream.

7. The cyclical swing adsorption process of any one of claims 1 to 6, wherein the gaseous feed stream comprises hydrocarbons and H₂O, wherein the H₂O is one of the one or more contaminants and the gaseous feed stream comprises H₂O in the range of two parts per million molar to saturation levels in the gaseous feed stream, preferably in the range of 50 parts per million molar to 1,500 parts per million molar.

8. The cyclical swing adsorption process of any one of claims 1 to 6, wherein the gaseous feed stream comprises hydrocarbons and CO₂, wherein the CO₂ is one of the one or more contaminants and the gaseous feed stream comprises CO₂ in the range between 0 molar percent and 5 molar percent of the total volume of the gaseous feed stream.

9. The cyclical swing adsorption process of any one of claims 1 to 8, wherein the feed pressure is in the range between 400 pounds per square inch absolute (psia) (27.57 bara) and 1,400 psia (96.52 bara).

10. The cyclical swing adsorption process of any one of claims 1 to 9, wherein the cycle duration is greater than 2 seconds and less than 300 seconds.

11. The cyclical swing adsorption process of any one of claims 1 to 10, wherein water content in the product stream is in the range between 0.0 ppm and 5.0 ppm.

12. The cyclical swing adsorption process of any one of claims 1 to 11, wherein the cryogenic recovery system (404) is a cryogenic natural gas liquids recovery system.

13. The cyclical swing adsorption process of any one of claims 1 to 11, wherein the cryogenic recovery system (404) is a cryogenic controlled freeze zone recovery system.

14. The cyclical swing adsorption process of any one of claims 1 to 13, wherein the adsorbent bed unit (410) comprises an adsorbent material of Zeolite 3A, Zeolite 4A or Zeolite 5A.

15. A system for carrying out the process according claim 1, the system comprising:
one or more adsorbent bed units (410), wherein each of the one or more adsorbent bed units (410) is configured to separate contaminants from a gaseous feed stream and to output a product stream, wherein the gaseous feed stream is provided at a feed temperature;
a cryogenic recovery system (404) configured to receive the product stream and pass at least portion of the product stream to a demethanizer (430) to separate the at least a portion of the product stream into a final product stream and a demethanizer overhead stream comprising methane; and
wherein the cryogenic recovery system is further configured to pass a purge stream through the or each of the one or more adsorbent bed units (410), said purge stream comprising at least a portion of the demethanizer overhead stream.

16. The system of claim 15, further comprising:
a glycol contactor unit (406) configured to receive an input stream and to remove at least a portion of the water from the input stream; and
a filter unit (408) configured to receive the glycol output stream from the glycol contactor unit (406) and to conduct away particulates and liquid droplets and to provide the feed stream to the one or more adsorbent bed units (410).

17. The system of any one of claims 15 to 16, further comprising a gas/gas exchanger unit configured to receive the product stream from the adsorbent bed unit and to lower the temperature of the product stream by heat exchange with the at least portion of the demethanizer overhead stream, preferably further comprising a subcooler unit (340) configured to receive a portion of the exchanger output stream from the gas/gas exchanger unit (330) and to adjust the temperature of the portion of the exchanger output stream to the desired temperature for the demethanizer (430) by heat exchange with the at least portion of the demethanizer overhead stream.

18. The system of claim 17, further comprising a compressor configured to receive the demethanizer overhead stream from the gas/gas exchanger unit; increase the pressure of the demethanizer overhead stream into a compressed demethanizer overhead stream; and provide the compressed demethanizer overhead stream to a regeneration adsorbent bed unit as the purge stream.

19. The system of any one of claims 15 to 18, wherein the cryogenic recovery system (404) is a cryogenic natural gas liquids recovery system.

20. The system of any one of claims 15 to 18, wherein the cryogenic recovery system (404) is a cryogenic controlled freeze zone recovery system.

## Patentansprüche

1. Zyklisches Wechseladsorptionsverfahren zum Entfernen von Verunreinigungen aus einem gasförmigen Einsatzmaterialstrom, der Methan umfasst, bei dem
a) ein oder mehrere Adsorptionsschritte durchgeführt werden, wobei jeder der Adsorptionsschritte umfasst, dass ein gasförmiger Einsatzmaterialstrom mit einem Einsatzmaterialdruck und einer Einsatzmaterialtemperatur durch eine Adsorbensbetteinheit (410) geleitet wird, um eine oder mehrere Verunreinigungen aus dem gasförmigen Einsatzmaterialstrom zu entfernen und einen Produktstrom zu bilden, der an ein kryogenes Gewinnungssystem (404) geleitet wird, das einen Entmethanierer (430) einschließt, wobei mindestens ein Anteil des Produktstroms an den Entmethanierer (430) geleitet wird, um den mindestens einen Anteil des Produktstroms in einen Endproduktstrom und einen Entmethanierer-Kopfproduktstrom zu trennen, der Methan umfasst,
b) ein oder mehrere Druckentlastungsschritte durchgeführt werden, wobei der Druck der Adsorbensbetteinheit (410) mit jedem aufeinander folgenden Druckentlastungsschritt um einen vorbestimmten Betrag reduziert wird,
c) ein oder mehrere Spülschritte durchgeführt werden, wobei jeder der Spülschritte umfasst, dass ein Spülstrom durch die Adsorbensbetteinheit (410) in einer Gegenstromrichtung relativ zu dem Fluss des gasförmigen Einsatzmaterialstroms geleitet wird, um einen Spülproduktstrom zu bilden, wobei der Spülstrom mindestens einen Anteil des Entmethanierer-Kopfproduktstroms aus dem Entmethanierer (430) umfasst,
d) ein oder mehrere erneute Druckbeaufschlagungsschritte durchgeführt werden, wobei der Druck innerhalb der Adsorbensbetteinheit (410) mit jedem aufeinander folgenden erneuten Druckbeaufschlagungsschritt um einen vorbestimmten Betrag mit jedem erneuten Druckbeaufschlagungsschritt erhöht wird, und
e) die Schritte a) bis d) für mindestens einen zusätzlichen Zyklus wiederholt werden.

2. Zyklisches Wechseladsorptionsverfahren nach Anspruch 1, bei dem der Spülstrom mindestens 20 Volumenprozent des Entmethanierer-Kopfproduktstroms, vorzugsweise mindestens 50 Volumenprozent des Entmethanierer-Kopfproduktstroms, insbesondere mindestens 95 Volumenprozent des Entmethanierer-Kopfproduktstroms umfasst.

3. Zyklisches Wechseladsorptionsverfahren nach einem der Ansprüche 1 bis 2, bei dem der Spülstrom auf einer Spültemperatur innerhalb eines Bereichs zwischen 5,6°C unter der Einsatzmaterialtemperatur (10°F unter der Einsatzmaterialtemperatur) und 194°C oberhalb der Einsatzmaterialtemperatur (350°F oberhalb der Einsatzmaterialtemperatur) liegt.

4. Zyklisches Wechseladsorptionsverfahren nach einem der Ansprüche 1 bis 2, bei dem der Spülstrom auf einer Spültemperatur innerhalb eines Bereichs von 5,6°C unter der Einsatzmaterialtemperatur (10°F unter der Einsatzmaterialtemperatur) und 13,9°C oberhalb der Einsatzmaterialtemperatur (25°F oberhalb der Einsatzmaterialtemperatur) liegt.

5. Zyklisches Wechseladsorptionsverfahren nach einem der Ansprüche 1 bis 4, bei dem die Zyklusdauer größer als 1 Sekunde und kleiner als 600 Sekunden ist.

6. Zyklisches Wechseladsorptionsverfahren nach einem der Ansprüche 1 bis 5, bei dem der gasförmige Einsatzmaterialstrom ein kohlenwasserstoffhaltiger Strom mit mehr als einem Volumenprozent Kohlenwasserstoffen ist, bezogen auf das Gesamtvolumen des Einsatzmaterialstroms.

7. Zyklisches Wechseladsorptionsverfahren nach einem der Ansprüche 1 bis 6, bei dem der gasförmige Einsatzmaterialstrom Kohlenwasserstoffe und H₂O umfasst, wobei das H₂O eine der einen oder mehreren Verunreinigungen ist und der gasförmige Einsatzmaterialstrom H₂O im Bereich von zwei Teilen pro Million (ppm) molar bis zu Sättigungsniveaus in dem gasförmigen Einsatzmaterialstrom umfasst, vorzugsweise im Bereich von 50 ppm molar bis 1500 ppm molar.

8. Zyklisches Wechseladsorptionsverfahren nach einem der Ansprüche 1 bis 6, bei dem der gasförmige Einsatzmaterialstrom Kohlenwasserstoffe und CO₂ umfasst, wobei das CO₂ eine der einen oder mehreren Verunreinigungen ist und der gasförmige Einsatzmaterialstrom CO₂ im Bereich zwischen 0 Molprozent und 5 Molprozent des Gesamtvolumens des gasförmigen Einsatzmaterialstroms umfasst.

9. Zyklisches Wechseladsorptionsverfahren nach einem der Ansprüche 1 bis 8, bei dem der Einsatzmaterialdruck im Bereich von 27, 57 bar absolut (400 lb/in² absolut, psia) und 96, 52 bar absolut (1400 psia) liegt.

10. Zyklisches Wechseladsorptionsverfahren nach einem der Ansprüche 1 bis 9, bei dem die Zyklusdauer größer als 2 Sekunden und kleiner als 300 Sekunden ist.

11. Zyklisches Wechseladsorptionsverfahren nach einem der Ansprüche 1 bis 10, bei dem der Wassergehalt in dem Produktstrom in dem Bereich zwischen 0,0 ppm und 5,0 ppm liegt.

12. Zyklisches Wechseladsorptionsverfahren nach einem der Ansprüche 1 bis 11, bei dem das kryogene Gewinnungssystem (404) ein kryogenes Gewinnungssystem für Erdgasflüssigkeiten ist.

13. Zyklisches Wechseladsorptionsverfahren nach einem der Ansprüche 1 bis 11, bei dem das kryogene Gewinnungssystem (404) ein kryogenes Gewinnungssystem mit kontrollierter Gefrierzone ist.

14. Zyklisches Wechseladsorptionsverfahren nach einem der Ansprüche 1 bis 13, bei dem die Adsorbensbetteinheit (410) ein Adsorbensmaterial aus Zeolith 3A, Zeolith 4A oder Zeolith 5A umfasst.

15. System zum Durchführen des Verfahrens nach Anspruch 1, das folgendes umfasst:
eine oder mehrere Adsorbensbetteinheiten (410), wobei jede der einen oder mehreren Adsorbensbetteinheiten (410) ausgestaltet ist, um Verunreinigungen von einem gasförmigen Einsatzmaterialstrom zu trennen und einen Produktstrom auszugeben, wobei der gasförmige Einsatzmaterialstrom mit einer Einsatzmaterialtemperatur bereitgestellt wird,
ein kryogenes Gewinnungssystem (404), das ausgestaltet ist, um den Produktstrom zu empfangen und mindestens einen Anteil des Produktstrons an einen Entmethanierer (430) zu leiten, um den mindestens einen Anteil des Produktstroms in einen Endproduktstrom und einen Entmethanierer-Kopfproduktstrom zu trennen, der Methan umfasst, und
wobei das kryogene Gewinnungssystem des Weiteren ausgestaltet ist, um einen Spülstrom durch die oder jede der einen oder mehreren Adsorbensbetteinheiten (410) zu leiten, wobei der Spülstrom mindestens einen Anteil des Entmethanierer-Kopfproduktstroms umfasst.

16. System nach Anspruch 15, das des Weiteren
eine Glykolkontaktiereinheit (406), die ausgestaltet ist, um einen Eingabestrom zu empfangen und mindestens einen Anteil des Wassers aus einem Eingabestrom zu entfernen, und
eine Filtereinheit (408) umfasst, die ausgestaltet ist, um den Glykolausgabestrom von der Glykolkontaktiereinheit (406) zu empfangen und Partikelmaterialien und Flüssigkeitströpfchen wegzuführen und den Einsatzmaterialstrom an die eine oder mehreren Adsorbensbetteinheiten (410) bereitzustellen.

17. System nach einem der Ansprüche 15 bis 16, das des Weiteren eine Gas/Gas-Tauschereinheit umfasst, die ausgestaltet ist, um den Produktstrom von der Adsorbensbetteinheit zu empfangen und die Temperatur des Produktstroms durch Wärmetausch mit dem mindestens einen Anteil des Entmethanierer-Kopfproduktstroms zu senken, und das vorzugsweise des Weiteren eine Unterkühlereinheit (340) umfasst, die ausgestaltet ist, um einen Anteil des Tauscherausgabestroms von der Gas/Gas-Tauschereinheit (330) zu empfangen und die Temperatur des Anteils des Tauscherausgabestroms durch Wärmetausch mit dem mindestens einen Anteil des Entmethanierer-Kopfproduktstroms auf die gewünschte Temperatur für den Entmethanierer (430) anzupassen.

18. System nach Anspruch 17, das des Weiteren einen Kompressor umfasst, der ausgestaltet ist, um den Entmethanierer-Kopfproduktstrom von der Gas/Gas-Tauschereinheit zu empfangen, den Druck des Entmethanierer-Kopfproduktstroms zu einem komprimierten Entmethanierer-Kopfproduktstrom zu erhöhen und den komprimierten Entmethanierer-Kopfproduktstrom als Spülstrom an eine Regenerationsadsorbensbetteinheit bereitzustellen.

19. System nach einem der Ansprüche 15 bis 18, bei dem das kryogene Gewinnungssystem (404) ein kryogenes Gewinnungssystem für Erdgasflüssigkeiten ist.

20. System nach einem der Ansprüche 15 bis 18, bei dem das kryogene Gewinnungssystem (404) ein kryogenes Gewinnungssystem mit kontrollierter Gefrierzone ist.

## Revendications

1. Procédé d'adsorption modulée cyclique destiné à retirer des contaminants d'un courant d'alimentation gazeux comprenant du méthane, le procédé comprenant :
a) la réalisation d'une ou plusieurs étapes d'adsorption, chacune des étapes d'adsorption comprenant le passage du courant d'alimentation gazeux à une pression d'alimentation et une température d'alimentation à travers une unité de lits d'adsorbant (410) pour retirer un ou plusieurs contaminants du courant d'alimentation gazeux et pour former un courant de produit qui est passé à un système de récupération cryogénique (404) comportant un déméthaniseur (430), au moins une partie du courant de produit étant passée au déméthaniseur (430) pour séparer l'au moins une partie du courant de produit en un courant de produit final et un courant de tête de déméthaniseur comprenant du méthane ;
b) la réalisation d'une ou plusieurs étapes de dépressurisation, dans lesquelles la pression de l'unité de lits d'adsorbant (410) est réduite d'une quantité prédéterminée avec chaque étape de dépressurisation successive ;
c) la réalisation d'une ou plusieurs étapes de purge, chacune des étapes de purge comprenant le passage d'un courant de purge à travers l'unité de lits d'adsorbant (410) dans une direction à contre-courant par rapport à l'écoulement du courant d'alimentation gazeux pour former un courant de produit de purge, le courant de purge comprenant au moins une partie du courant de tête de déméthaniseur provenant du déméthaniseur (430) ;
d) la réalisation d'une ou plusieurs étapes de repressurisation, dans lesquelles la pression de l'unité de lits d'adsorbant (410) est augmentée avec chaque étape de repressurisation d'une quantité prédéterminée avec chaque étape de repressurisation successive ; et
e) la répétition des étapes a) à d) pendant au moins un cycle supplémentaire.

2. Procédé d'adsorption modulée cyclique de la revendication 1, dans lequel le courant de purge comprend au moins 20 % en volume du courant de tête de déméthaniseur, de préférence au moins 50 % en volume du courant de tête de déméthaniseur, mieux encore au moins 95 % en volume du courant de tête de déméthaniseur.

3. Procédé d'adsorption modulée cyclique de l'une quelconque des revendications 1 à 2, dans lequel le courant de purge est à une température de purge dans une gamme comprise entre 10 °F en dessous de la température d'alimentation (5,6 °C en dessous de la température d'alimentation) et 350 °F au-dessus de la température d'alimentation (194 °C au-dessus de la température d'alimentation).

4. Procédé d'adsorption modulée cyclique de l'une quelconque des revendications 1 à 2, dans lequel le courant de purge est à une température de purge dans une gamme comprise entre 10 °F en dessous de la température d'alimentation (5,6 °C en dessous de la température d'alimentation) et 25 °F au-dessus de la température d'alimentation (13,9 °C au-dessus de la température d'alimentation).

5. Procédé d'adsorption modulée cyclique de l'une quelconque des revendications 1 à 4, dans lequel la durée d'un cycle est supérieure à 1 seconde et inférieure à 600 secondes.

6. Procédé d'adsorption modulée cyclique de l'une quelconque des revendications 1 à 5, dans lequel le courant d'alimentation gazeux est un courant contenant des hydrocarbures ayant plus d'un pour cent en volume d'hydrocarbures, rapporté au volume total du courant d'alimentation.

7. Procédé d'adsorption modulée cyclique de l'une quelconque des revendications 1 à 6, dans lequel le courant d'alimentation gazeux comprend des hydrocarbures et de l'H₂O, l'H₂O étant le ou l'un des contaminants et le courant d'alimentation gazeux comprenant de l'H₂O dans la gamme de deux parties par million molaires jusqu'à des niveaux de saturation dans le courant d'alimentation gazeux, de préférence dans la gamme de 50 parties par million molaires à 1500 parties par million molaires.

8. Procédé d'adsorption modulée cyclique de l'une quelconque des revendications 1 à 6, dans lequel le courant d'alimentation gazeux comprend des hydrocarbures et du CO₂, le CO₂ étant le ou l'un des contaminants et le courant d'alimentation gazeux comprenant du CO₂ dans la gamme comprise entre 0 pour cent en moles et 5 pour cent en moles du volume total du courant d'alimentation gazeux.

9. Procédé d'adsorption modulée cyclique de l'une quelconque des revendications 1 à 8, dans lequel la pression d'alimentation se situe dans la gamme comprise entre 400 livres par pouce carré absolu (psia) (27,57 bara) et 1400 psia (96,52 bara).

10. Procédé d'adsorption modulée cyclique de l'une quelconque des revendications 1 à 9, dans lequel la durée d'un cycle est supérieure à 2 secondes et inférieure à 300 secondes.

11. Procédé d'adsorption modulée cyclique de l'une quelconque des revendications 1 à 10, dans lequel la teneur en eau dans le courant de produit se situe dans la gamme comprise entre 0,0 ppm et 5,0 ppm.

12. Procédé d'adsorption modulée cyclique de l'une quelconque des revendications 1 à 11, dans lequel le système de récupération cryogénique (404) est un système de récupération cryogénique de liquides de gaz naturel.

13. Procédé d'adsorption modulée cyclique de l'une quelconque des revendications 1 à 11, dans lequel le système de récupération cryogénique (404) est un système de récupération cryogénique à zone de congélation contrôlée.

14. Procédé d'adsorption modulée cyclique de l'une quelconque des revendications 1 à 13, dans lequel l'unité de lits d'adsorbant (410) comprend un matériau adsorbant en zéolithe 3A, zéolithe 4A ou zéolithe 5A.

15. Système destiné à réaliser le procédé selon la revendication 1, le système comprenant :
une ou plusieurs unités de lits d'adsorbant (410), l'unité ou chacune des unités de lits d'adsorbant (410) étant configurée pour séparer des contaminants d'un courant d'alimentation gazeux et pour délivrer un courant de produit, le courant d'alimentation gazeux étant fourni à une température d'alimentation ;
un système de récupération cryogénique (404) configuré pour recevoir le courant de produit et faire passer au moins une partie du courant de produit à un déméthaniseur (430) pour séparer l'au moins une partie du courant de produit en un courant de produit final et un courant de tête de déméthaniseur comprenant du méthane ; et
dans lequel le système de récupération cryogénique est également configuré pour faire passer un courant de purge à travers l'unité ou chacune des unités de lits d'adsorbant (410), ledit courant de purge comprenant au moins une partie du courant de tête de déméthaniseur.

16. Système de la revendication 15, comprenant en outre :
une unité de mise en contact avec du glycol (406) configurée pour recevoir un courant d'entrée et pour retirer au moins une partie de l'eau du courant d'entrée ; et
une unité de filtration (408) configurée pour recevoir le courant de sortie du glycol provenant de l'unité de mise en contact avec du glycol (406) et pour évacuer les particules et les gouttelettes liquides et pour fournir le courant d'alimentation à l'unité ou aux unités de lits d'adsorbant (410).

17. Système de l'une quelconque des revendications 15 à 16, comprenant en outre une unité d'échange gaz/gaz configurée pour recevoir le courant de produit provenant de l'unité de lits d'adsorbant et pour abaisser la température du courant de produit par échange de chaleur avec l'au moins une partie du courant de tête de déméthaniseur, de préférence comprenant en outre une unité de sous-refroidissement (340) configurée pour recevoir une partie du courant de sortie d'échangeur provenant de l'unité d'échange gaz/gaz (330) et pour régler la température de la partie du courant de sortie d'échangeur à la température souhaitée pour le déméthaniseur (430) par échange de chaleur avec l'au moins une partie du courant de tête de déméthaniseur.

18. Système de la revendication 17, comprenant en outre un compresseur configuré pour recevoir le courant de tête de déméthaniseur provenant de l'unité d'échange gaz/gaz ; augmenter la pression du courant de tête de déméthaniseur pour obtenir un courant de tête de déméthaniseur comprimé ; et fournir le courant de tête de déméthaniseur comprimé à une unité de lits d'adsorbant de régénération en tant que courant de purge.

19. Système de l'une quelconque des revendications 15 à 18, dans lequel le système de récupération cryogénique (404) est un système de récupération cryogénique de liquides de gaz naturel.

20. Système de l'une quelconque des revendications 15 à 18, dans lequel le système de récupération cryogénique (404) est un système de récupération cryogénique à zone de congélation contrôlée.
